(19) Europäisches Patentamt
European Patent Office
Office européen des brevets

(11) EP 4 703 396 A1

(12) **EUROPEAN PATENT APPLICATION**
published in accordance with Art. 153(4) EPC

(43) Date of publication:
**04.03.2026 Bulletin 2026/10**

(21) Application number: **24797123.7**

(22) Date of filing: **25.04.2024**

(51) International Patent Classification (IPC):
***C08F 236/04*** *(2006.01)* ***C08F 8/42*** *(2006.01)*

(52) Cooperative Patent Classification (CPC):
**C08F 8/42; C08F 236/04**

(86) International application number:
**PCT/JP2024/016246**

(87) International publication number:
**WO 2024/225378 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 JP 2023072838**

(71) Applicant: **Asahi Kasei Kabushiki Kaisha**
**Tokyo 1000006 (JP)**

(72) Inventors:
- **USHIO, Takaaki**
  **Tokyo 100-0006 (JP)**
- **HASHIZUME, Yuta**
  **Tokyo 100-0006 (JP)**
- **DALL'ABACO, Davide**
  **20126 Milan (IT)**
- **RUBINO, Lucia Rita**
  **20126 Milan (IT)**

(74) Representative: **Strehl & Partner mbB**
**Maximilianstrasse 54**
**80538 München (DE)**

(54) **CONJUGATED DIENE POLYMER AND METHOD FOR PRODUCING CONJUGATED DIENE POLYMER**

(57) The present invention provides a conjugated diene-based polymer, wherein an estimated glass transition temperature (estimated Tg) derived from a microstructure of the conjugated diene-based polymer is -72°C or more and -45°C or less, the conjugated diene-based polymer has only one glass transition temperature (Tg) measured by differential scanning calorimetry (DSC), and a difference between an extrapolated onset temperature and an extrapolated end temperature of the glass transition temperature (Tg) is 15°C or more and 35°C or less.

EP 4 703 396 A1

## Description

### Technical Field

The present invention relates to a conjugated diene-based polymer, and a method for producing a conjugated diene-based polymer.

### Background Art

One of basic functions required of a tire tread of a vehicle is a braking property on a road. Owing to the climate change in these years, the road surface may get wet due to a sudden rainfall, or the road surface may be changed to an ice and snow surface due to a sudden snowfall. Under these environments, there is a demand for a rubber material to be used in a tire tread having an excellent braking property not only on a dry road surface but also on an ice and snow road surface or wet road surface.

In general, a wet grip performance that is a required property of a rubber for exhibiting a braking property on a wet road surface, and a low-temperature performance that is a required property of a rubber for exhibiting a braking property on snow are contradictory to each other, and improvement of one of the performances tends to cause deterioration of the other performance. A tire tread rubber is required to solve the contradiction of these properties.

Besides, for improvement of the low-temperature performance, there is conventionally a known rubber composition that is reduced in the elastic modulus at a low temperature for ensuring high followability of a tread rubber to a snow road surface, and a technique for reducing the glass transition temperature of a rubber material for reducing the glass transition temperature of a rubber composition has been proposed.

On the other hand, there is a known method in which the glass transition temperature of a rubber composition is increased for improving the wet grip performance, and a technique for increasing the glass transition temperature of a rubber material for increasing the glass transition temperature of a rubber composition has been proposed.

For example, Patent Document 1 discloses a rubber composition containing a modified conjugated diene-based polymer having a low glass transition temperature obtained by reacting an alkoxysilane having an amino group with an active end of a conjugated diene-based polymer, and silica, and thus proposes a technique for improving the low-temperature performance.

Patent Document 2 discloses a rubber composition containing a conjugated diene-based polymer having a high glass transition temperature, and silica, and thus, proposes a technique for improving the wet grip performance.

### Citation List

### Patent Document

Patent Document 1: International Publication No. WO2021/005295

Patent Document 2: Japanese Patent No. 3438317

### Summary of Invention

### Technical Problem

It is deemed that all-weather tires usable in all seasons have become popular in Europe and the like, and there is a demand for a rubber composition improved in the wet grip performance in a wide temperature range.

When the present inventors examined conventional rubber compositions disclosed in Patent Documents 1 and 2 in detail, however, it has been found that the conventional rubber compositions have a problem that there is a room of improvement in balance between the wet grip performance and the low-temperature performance of a vulcanizate thereof.

Specifically, a rubber composition containing a conjugated diene-based polymer is required to have flexibility not reduced at a low temperature, and have an excellent braking property also on an ice and snow road surface with improving the wet grip performance of a vulcanizate thereof.

Therefore, an object of the present invention is to provide a conjugated diene-based polymer from which a tire excellent in the wet grip performance and the low-temperature performance can be obtained, and a method for producing the conjugated diene-based polymer.

Solution to Problem

The present inventors have made earnest studies to solve the above-described problems, resulting in finding that when a polymer having prescribed properties regarding the glass transition temperature is used, a vulcanizate of the polymer can be good in both the wet grip performance and the low-temperature performance, and thus, the present invention has been accomplished.

Specifically, the present invention provides the following:

[1] A conjugated diene-based polymer, wherein an estimated glass transition temperature (estimated Tg) derived from a microstructure of the conjugated diene-based polymer is -72°C or more and -45°C or less, the conjugated diene-based polymer has only one glass transition temperature (Tg) measured by differential scanning calorimetry (DSC), and a difference between an extrapolated onset temperature and an extrapolated end temperature of the glass transition temperature (Tg) is 15°C or more and 35°C or less.

[2] The conjugated diene-based polymer according to [1], containing a first polymer segment not containing an aromatic vinyl monomer unit, and a second polymer segment containing an aromatic vinyl monomer unit, wherein an amount of vinyl bond $Y_1$ (mol%) in bound conjugated diene in the first polymer segment satisfies the following expression (2):

$$10 \leq Y_1 \leq 45 \ldots (2)$$

an estimated glass transition temperature (estimated Tg) derived from a microstructure of the second polymer segment is more than -45°C and -5°C or less.

[3] The conjugated diene-based polymer according to [1] or [2], wherein a molecular weight distribution corresponding to a ratio Mw/Mn between a weight average molecular weight Mw and a number average molecular weight Mn is 1.7 or more and 2.5 or less.

[4] The conjugated diene-based polymer according to [2] or [3], wherein a segment ratio of the first polymer segment is 20% by mass or more and 80% by mass or less.

[5] The conjugated diene-based polymer according to any one of [1] to [4], having a weight average molecular weight of 300,000 or more and 1,350,000 or less.

[6] The conjugated diene-based polymer according to any one of [1] to [5], containing a nitrogen atom.

[7] The conjugated diene-based polymer according to [6], wherein a modification ratio of the conjugated diene-based polymer is 70% or more.

[8] A method for producing the conjugated diene-based polymer according to any one of [2] to [7], using two or more continuous reactors, the method including: a first polymerization step (P1) of continuously forming the first polymer segment of the conjugated diene-based polymer with a conjugated diene compound, a polymerization initiator, and a polar material added to the continuous reactors; and a second polymerization step (P2) of forming the second polymer segment at an end of the first polymer segment with an aromatic vinyl compound and a polar material added to the continuous reactors.

[9] The method for producing the conjugated diene-based polymer according to [8], further including, after the second polymerization step (P2), a coupling step (P3) of reacting a coupling agent with the conjugated diene-based polymer.

[10] The method for producing the conjugated diene-based polymer according to [8] or [9], wherein a mass ratio of the conjugated diene compound added in the first polymerization step (P1) to a total amount of the conjugated diene compound and the aromatic vinyl compound added is 20% by mass or more and 80% by mass or less.

[11] The method for producing the conjugated diene-based polymer according to any one of [8] to [10], wherein a polymerization reaction rate in the first polymerization step (P1) is 75% or more and 95% or less.

[12] The method for producing the conjugated diene-based polymer according to any one of [8] to [11], wherein a mass

ratio of an amount of the aromatic vinyl compound added to an amount of the conjugated diene compound added in the second polymerization step (P2) is 0.15 or more and 0.70 or less.

[13] The method for producing the conjugated diene-based polymer according to any one of [8] to [12], wherein the polar material is added in the second polymerization step (P2) in an amount larger than an amount of the polar material added in the first polymerization step (P1).

[14] The method for producing the conjugated diene-based polymer according to any one of [9] to [13], wherein the coupling agent is an aminoalkoxysilane compound.

Advantageous Effect of Invention

The present invention provides a conjugated diene-based polymer whose vulcanizate is excellent in both the wet grip performance and the low-temperature performance.

Description of Embodiments

Now, an embodiment for practicing the present invention (hereinafter referred to as the "present embodiment") will be described in detail.

It is noted that the following present embodiment is merely an example for describing the present invention, and does not intend to limit the present invention to the following contents. The present invention can be practiced with various modifications appropriately made within the scope thereof.

[Conjugated Diene-based Polymer]

A conjugated diene-based polymer of the present embodiment contains a conjugated diene monomer unit, and an aromatic vinyl monomer unit.

The conjugated diene-based polymer of the present embodiment has an estimated glass transition temperature derived from a microstructure of the conjugated diene-based polymer (hereinafter, sometimes referred to as the estimated Tg) of -72°C or more and -45°C or less.

The estimated glass transition temperature (estimated Tg) is derived from a microstructure of the conjugated diene-based polymer as described below.

The conjugated diene-based polymer of the present embodiment has only one glass transition temperature (Tg) measured by differential scanning calorimetry (DSC), and a difference between an extrapolated onset temperature and an extrapolated end temperature of the glass transition temperature (Tg) is 15°C or more and 35°C or less.

The above-described configuration provides a conjugated diene-based polymer from which a vulcanizate excellent in both the wet grip performance and the low-temperature performance can be obtained.

(Conjugated Diene Compound)

Examples of a conjugated diene compound forming the conjugated diene monomer unit include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene, and isoprene are preferred from the viewpoint of industrial availability. One of these may be singly used, or two or more of these may be used together.

The conjugated diene compound is preferably 1,3-butadiene or isoprene, and more preferably 1,3-butadiene from the viewpoints of availability, and structure controllability in polymer synthesis.

(Aromatic Vinyl Compound)

Examples of an aromatic vinyl compound forming the aromatic vinyl monomer unit include, but are not limited to, styrene, p-methylstyrene, $\alpha$-methylstyrene, vinylethylbenzene, vinylxylene, vinylnaphthalene, and diphenylethylene. Among these, styrene is preferred from the viewpoint of industrial availability. One of these may be singly used, or two or more of these may be used together.

The aromatic vinyl compound is preferably styrene from the viewpoints of availability, and structure controllability in polymer synthesis.

(Microstructure)

The microstructure herein refers to a composition of a polymer, including the type of isomer, in the conjugated diene-based polymer using the aromatic vinyl compound and the conjugated diene compound, or in a polymer segment described below.

In the conjugated diene-based polymer of the present embodiment, the mass of a copolymer consisting of styrene and butadiene is preferably 70% by mass or more, more preferably 80% by mass or more, and further preferably 90% by mass or more with respect to the mass of the entire conjugated diene-based polymer.

<Amount of Bound Aromatic Vinyl Monomer Unit ($X_{all}$)>

The estimated Tg of the conjugated diene-based polymer of the present embodiment is derived from the microstructure of the conjugated diene-based polymer, and an example of the microstructure includes an amount of bound aromatic vinyl monomer unit ($X_{all}$).

The amount of bound aromatic vinyl monomer unit ($X_{all}$) (% by mass) herein refers to a value of a mass fraction of a bound aromatic vinyl monomer unit in the total mass of the conjugated diene-based polymer of the present embodiment.

Here, the amount of bound aromatic vinyl monomer unit can be calculated by measuring ultraviolet absorption of a phenyl group contained in a portion derived from the aromatic vinyl compound of the conjugated diene-based polymer (hereinafter, sometimes referred to as the "bound aromatic vinyl monomer unit" or "aromatic vinyl monomer unit"). When the conjugated diene-based polymer contains the bound aromatic vinyl monomer unit, and a bound conjugated diene monomer unit, the amount of the bound conjugated diene monomer unit can be obtained based on the amount of the bound aromatic vinyl monomer unit obtained as described above. Specifically, the amount can be measured by a method described in examples below.

<Amount of Vinyl Bond ($Y_{all}$) in Bound Conjugated Diene>

The estimated Tg of the conjugated diene-based polymer of the present embodiment is derived from the microstructure of the conjugated diene-based polymer, and an example of the microstructure includes an amount of vinyl bond ($Y_{all}$) in bound conjugated diene.

The amount of vinyl bond ($Y_{all}$) (mol%) in bound conjugated diene herein refers to a value of a mole fraction (mol%) of a 1,2-bond unit in a polymer unit derived from the conjugated diene compound contained in the conjugated diene-based polymer of the present embodiment.

When the conjugated diene-based polymer of the present embodiment is a copolymer of butadiene and styrene, the amount of vinyl bond in bound conjugated diene can be obtained by obtaining the amount of vinyl bond (amount of 1,2-bond) in bound butadiene by Hampton method (R. R. Hampton, Analytical Chemistry, 21, 923 (1949)). Specifically, the amount can be measured by a method described in the examples below.

<Content of Bound Aromatic Vinyl Monomer Unit Block>

The conjugated diene-based polymer of the present embodiment preferably contains a few or no blocks in which 4 or more bound aromatic vinyl monomer units are chained (hereinafter sometimes referred to as the bound aromatic vinyl monomer unit block).

The conjugated diene-based polymer of the present embodiment contains a few or no bound aromatic vinyl monomer unit blocks, and hence tends to be unlikely to have two or more glass transition temperatures.

A content of the bound aromatic vinyl monomer unit block in the conjugated diene-based polymer can be measured, when the conjugated diene-based polymer is a butadiene-styrene polymer, by employing a known method in which the conjugated diene-based polymer is decomposed by Kolthoff method (a method described by I. M. KOLTHOFF, et al., J. Polym. Sci. 1, 429 (1946)) to analyze the amount of polystyrene insoluble in methanol. The content of the bound aromatic vinyl monomer unit block measured by such a method is preferably 1.0 % by mass or less, and more preferably 0.1% by mass or less with respect to the total amount of the conjugated diene-based polymer. When the bound aromatic vinyl monomer unit block is not contained in a conjugated diene copolymer, and in the polymer segment described below, the conjugated diene-based polymer of the present embodiment tends to exhibit a consecutive property against temperature change. As a result, a vulcanizate using the conjugated diene-based polymer of the present embodiment consecutively changes in a wide temperature range, and tends to be excellent in tensile strength.

(Method for Estimating Glass Transition Temperature of Conjugated Diene-based Polymer): Estimated Glass Transition Temperature (Estimated Tg)

The glass transition temperature of the conjugated diene-based polymer of the present embodiment can be calculated by Gordon Taylor formula expanded to two or more component series of the following expression (1) (Gordon, M., Taylor J. S. J., Appl. Chem. 1952, 2, 493). A value calculated by this method is referred to as the estimated glass transition temperature (estimated Tg).

$$\text{Estimated } Tg = \frac{\sum_i \left(\frac{\Delta\alpha_i w_i Tg_i}{\rho_i}\right)}{\sum_i \left(\frac{\Delta\alpha_i w_i}{\rho_i}\right)} \quad \cdots (1)$$

In the expression (1), a subscript i of each variable indicates each component of the microstructure contained in the conjugated diene-based polymer, $\Delta\alpha_i$ denotes a difference in the thermal expansion coefficient of a homopolymer of the component i caused through glass transition, $w_i$ denotes a mass ratio of the component i in the conjugated diene-based polymer, $Tg_i$ denotes the glass transition temperature of the homopolymer of the component i, and $\rho_i$ denotes the density of the homopolymer of the component i. As these values, a Document value or a measured value can be used. For example, when the conjugated diene-based polymer contains styrene, and one of the components i is a styrene component, $\Delta\alpha_i$ can be $3.6 \times 10^{-4}$ $K^{-1}$ based on the thermal expansion coefficient of polystyrene (J. BRANDRUP et al., Polymer Handbook, 3rd edition, (U.S.A.), John Wiley & Sons, Inc., 1966, VI-75), $Tg_i$ can be 105.3°C based on the measured value of the glass transition temperature, and $\rho_i$ can be 1.02 g/$cm^3$ based on the measured value of the density.

For example, when the conjugated diene-based polymer is a butadiene-styrene copolymer, the estimated glass transition temperature (estimated Tg) can be calculated in accordance with the following expression (i) by using the amount of bound aromatic vinyl monomer unit $X_{all}$ (% by mass), the amount of vinyl bond $Y_{all}$ (mol%) in bound conjugated diene, and the thermal expansion coefficient ($\Delta a_i$), the glass transition temperature ($Tg_i$), and the density ($\rho_i$) of each of polystyrene (PS), poly-1,2-butadiene (1,2-PBd), and poly-1,4-butadiene (1,4-PBd):

$$\text{Estimated } Tg = \frac{\frac{\Delta a_{st}\times\frac{X_{all}}{100}\times Tg_{(PS)}}{\rho_{(PS)}} + \frac{\Delta a_{(1,4\,PBd)}\times\left(1-\frac{X_{all}}{100}\right)\times\left(1-\frac{Y_{all}}{100}\right)\times Tg_{(1,4PBd)} + \Delta a_{(1,2\,PBd)}\times\left(1-\frac{X_{all}}{100}\right)\times\left(\frac{Y_{all}}{100}\right)\times Tg_{(1,2PBd)}}{\rho_{(PBd)}}}{\frac{\Delta a_{st}\times\frac{X_{all}}{100}}{\rho_{(PS)}} + \frac{\Delta a_{(1,4\,PBd)}\times\left(1-\frac{X_{all}}{100}\right)\times\left(1-\frac{Y_{all}}{100}\right) + \Delta a_{(1,2\,PBd)}\times\left(1-\frac{X_{all}}{100}\right)\times\left(\frac{Y_{all}}{100}\right)}{\rho_{(PBd)}}}$$

$$= \frac{\frac{X_{all}}{100}\times 37{,}2 + \left(1-\frac{X_{all}}{100}\right)\times\left\{\left(1-\frac{Y_{all}}{100}\right)\times(-57.5)+\left(\frac{Y_{all}}{100}\right)\times(-5.38)\right\}}{\frac{X_{all}}{100}\times 0.36 + \left(1-\frac{X_{all}}{100}\right)\times\left\{\left(1-\frac{Y_{all}}{100}\right)\times(0.56)+\left(\frac{Y_{all}}{100}\right)\times(0.46)\right\}} \quad \cdots (\mathrm{i})$$

$$= \frac{-5750+94.7\times X_{all}+52.12\times Y_{all}-0.5212\times X_{all}\times Y_{all}}{56-0.2\times X_{all}-0.1\times Y_{all}+0.001\times X_{all}\times Y_{all}} \quad \cdots (\mathrm{i})$$

The influence, on the denominator of the expression (i), of a product of the amount of bound aromatic vinyl monomer unit $X_{all}$ (% by mass) and the amount of vinyl bond $Y_{all}$ (mol%) in bound conjugated diene is very small, and hence the expression can be approximated to the following expression (ii). Besides, the expression (ii) can be approximated to the following expression (iii).

$$\text{Estimated } \mathrm{Tg} \fallingdotseq \frac{-5750+94.7\times X_{all}+52.12\times Y_{all}-0.5212\times X_{all}\times Y_{all}}{56-0.2\times X_{all}-0.1\times Y_{all}} \quad \cdots (\mathrm{ii})$$

$$\text{Estimated } \mathrm{Tg} \fallingdotseq \frac{-5750+95\times X_{all}+52\times Y_{all}-0.52\times X_{all}\times Y_{all}}{56-0.2\times X_{all}-0.1\times Y_{all}} \quad \cdots (\mathrm{iii})$$

Specifically, in using a butadiene homopolymer, or a butadiene-styrene-based copolymer, the physical property of the conjugated diene-based polymer can be predicted in accordance with the expression (iii) based on a value usually used in design.

In accordance with the expression (1), a mass ratio among microstructure components can be obtained based on

the microstructure such as the amount of bound aromatic vinyl monomer unit $X_{all}$ (% by mass) in the conjugated diene-based polymer of the present embodiment, and the amount of vinyl bond $Y_{all}$ (mol%) in bound conjugated diene, and the glass transition temperature (Tg) of the conjugated diene-based polymer can be estimated. In other words, the estimated Tg is a standard indicating the change of the glass transition temperature of the conjugated diene-based polymer against the change of the amount of bound aromatic vinyl monomer unit $X_{all}$ (% by mass) and the amount of vinyl bond $Y_{all}$ (mol%) in bound conjugated diene.

When the estimated Tg has a small value, the glass transition temperature (Tg) of the conjugated diene-based polymer of the present embodiment is low, and when the estimated Tg has a large value, the glass transition temperature (Tg) of the conjugated diene-based polymer of the present embodiment is high.

For example, when the estimated Tg is -70, the glass transition temperature of the conjugated diene-based polymer is estimated as -70°C, and when the estimated Tg is -45, the glass transition temperature of the conjugated diene-based polymer is estimated as -45°C.

In this manner, the value of the estimated Tg obtained based on the microstructure of the conjugated diene-based polymer is an index of the glass transition temperature of the conjugated diene-based polymer in general. The present inventors have, however, found that when the relaxation of a conjugated diene-based polymer in the vicinity of a measured glass transition temperature occurs in a wide range of temperature, actual viscoelasticity of a vulcanizate thereof does not always accord with the viscoelasticity based on the estimated glass transition temperature calculated based on the microstructure. Specifically, when a difference in the value of the estimated Tg between polymer segments described below is 33 or more, or the mass ratio of a first polymer segment described below is within a section of from 40 to 60, discrepancy between the glass transition temperature estimated based on the expression (1) (estimated Tg) and a measured glass transition temperature (Tg) tends to be conspicuous. Therefore, it has been found that, in the viewpoint of controlling the performance of a vulcanizate affected by the glass transition temperature, it is more effective to control the value of the estimated Tg calculated based on the microstructure to a specific value than to control the measured glass transition temperature of the conjugated diene-based polymer to a specific value. This seems to be because small energy change is picked up in DSC measurement (differential scanning calorimetry), and hence the entire glass transition temperature is affected by the start of the relaxation of a low Tg portion of the conjugated diene-based polymer, resulting in decreasing the measured glass transition temperature to be lower than the estimated glass transition temperature. For example, it has been experimentally confirmed that in conjugated diene-based polymers having the same microstructure as a whole, the glass transition temperature measured by DSC may be different by from about 2 to 5°C depending on a difference in the microstructure of each segment.

When the estimated Tg of the conjugated diene-based polymer of the present embodiment has a value in a numerical range of -72°C or more and -45°C or less, the measured glass transition temperature obtained in the form of a vulcanizate becomes an optimal value, and thus, balance between the wet grip performance and the low-temperature performance tends to be excellent.

In the conjugated diene-based polymer of the present embodiment, the lower limit of the estimated Tg derived from the microstructure is -72°C or more, preferably -70°C or more, and more preferably -68°C or more. When the lower limit of the estimated Tg falls in this range, the wet grip performance of a vulcanizate of the conjugated diene-based polymer of the present embodiment tends to be able to be improved.

The upper limit of the estimated Tg is -45°C or less, preferably -48°C or less, and more preferably -50°C or less. When the upper limit of the estimated Tg falls in this range, the low-temperature performance of the vulcanizate of the conjugated diene-based polymer of the present embodiment tends to be able to be improved.

The estimated Tg can be controlled to fall in the above-described numerical range by adjusting the microstructure of the conjugated diene-based polymer. For example, when the conjugated diene-based polymer is a butadiene-styrene-based copolymer, the estimated Tg can be controlled to fall in the above-described numerical range by adjusting the amount of bound styrene $X_{all}$ (% by mass) of the conjugated diene-based polymer, and the amount of vinyl bond $Y_{all}$ (mol%) in bound butadiene in accordance with the expression (iii).

(Polymer Segment)

The conjugated diene-based polymer of the present embodiment preferably has two or more polymer segments.

The polymer segment refers to a part of the conjugated diene-based polymer containing a conjugated diene monomer unit and an aromatic vinyl monomer unit, or containing a conjugated diene monomer unit.

Besides, in the conjugated diene-based polymer of the present embodiment, the polymer segment preferably contains a few or no blocks in which 4 or more bound aromatic vinyl monomer units are chained. When the block in which 4 or more aromatic vinyl monomer units are chained is contained, the range of the Tg tends to be wide, which is preferable from the viewpoint of increasing the difference between the extrapolated onset temperature and the extrapolated end temperature, but the glass transition temperature obtained by DSC measurement tends to be easily divided into two.

The plurality of polymer segments contained in the conjugated diene-based polymer of the present embodiment

have mutually different microstructures. In the respective polymer segments, for example, the amount of the bound aromatic vinyl monomer unit, and the amount of the vinyl bond in bound conjugated diene may be different. The respective polymer segments can be distinguished by a method described in the examples below.

<First Polymer Segment>

The conjugated diene-based polymer of the present embodiment preferably contains a first polymer segment not containing an aromatic vinyl monomer unit, and a second polymer segment containing an aromatic vinyl monomer unit. Thus, the value of an estimated Tg of the first polymer segment is smaller than the value of the estimated Tg of the conjugated diene-based polymer of the present embodiment (value of the entire polymer obtained by the expression (1)). In this case, the estimated Tg of the first polymer segment is calculated by assigning the respective components of the microstructure of the conjugated diene-based polymer to the expression (1). When the conjugated diene-based polymer is a butadiene-styrene copolymer, or a butadiene homopolymer, the estimated Tg of the conjugated diene-based polymer is calculated based on the amount of bound styrene $X_{all}$ (% by mass) of the conjugated diene-based polymer, and the amount of vinyl bond $Y_{all}$ (mol%) in bound butadiene in accordance with the expression (iii).

The first polymer segment does not contain an aromatic vinyl monomer unit, and the amount of vinyl bond $Y_1$ (mol%) in bound conjugated diene preferably satisfy the following expression (2):

$$10 \leq Y_1 \leq 45 \ldots (2)$$

The lower limit of $Y_1$ is more preferably larger than 10, further preferably 12 or more, and still further preferably 15 or more.

The upper limit of $Y_1$ is more preferably less than 45, further preferably 43 or less, and still further preferably 40 or less.

When the expression (2) is satisfied, the flexibility of the conjugated diene-based polymer of the present embodiment in a low temperature region is improved, and a vulcanizate thereof tends to be excellent in abrasion resistance.

The amount of vinyl bond $Y_1$ (mol%) in bound conjugated diene can be controlled to fall in the above-described numerical range by adjusting the amount of a polar material to be added in a first polymerization step of producing the first polymer segment.

<Second Polymer Segment>

The conjugated diene-based polymer of the present embodiment preferably contains the first polymer segment not containing an aromatic vinyl monomer unit, and the second polymer segment containing an aromatic vinyl monomer unit as described above.

The second polymer segment has a value of the estimated Tg larger than the value of the estimated Tg of the conjugated diene-based polymer of the present embodiment. In this case, the estimated Tg of the second polymer segment is calculated by assigning the respective components of the microstructure of the second polymer segment to the expression (1). When the conjugated diene-based polymer is a butadiene-styrene copolymer, or a butadiene homopolymer, the estimated Tg of the conjugated diene-based polymer is calculated based on the amount of bound styrene $X_{all}$ (% by mass) of the conjugated diene-based polymer, and the amount of vinyl bond $Y_{all}$ (mol%) in bound butadiene in accordance with the expression (iii).

The second polymer segment has the estimated Tg of preferably more than - 45°C and -5°C or less. The estimated Tg of the second polymer segment can be obtained based on the microstructure such as the amount of bound aromatic vinyl monomer unit $X_{all}$ (% by mass) of the second polymer segment, and the amount of vinyl bond $Y_{all}$ (mol%) in bound conjugated diene in accordance with the expression (1).

In the conjugated diene-based polymer of the present embodiment, the lower limit of the estimated Tg of the second polymer segment is preferably more than - 45°C, more preferably -44°C or more, and further preferably -43°C or more.

The upper limit of the estimated Tg of the second polymer segment is preferably -5°C or less, more preferably -10°C or less, and further preferably -15°C or less.

When the estimated Tg of the second polymer segment falls in the above-described numerical range, the conjugated diene-based polymer of the present embodiment is increased in hysteresis loss in a high temperature region, and a vulcanizate thereof tends to be excellent in the wet grip performance.

The estimated Tg of the second polymer segment of the conjugated diene-based polymer of the present embodiment calculated in accordance with the expression (1) can be controlled to fall in the above-described numerical

range by adjusting the microstructure of the second polymer segment.

The conjugated diene-based polymer of the present embodiment may contain another polymer segment in addition to the first polymer segment and the second polymer segment. For example, for increasing reactivity between the conjugated diene-based polymer and a coupling agent after synthesizing the first and second polymer segments, a third polymer segment containing a conjugated diene compound may be contained.

The polymer segments may be mutually directly coupled, or may be coupled via a coupling agent.

(Polymer Segment Ratio)

A polymer segment ratio of a conjugated diene-based polymer refers to an average mass fraction of each polymer segment in the entire conjugated diene-based polymer.

The first and second polymer segment ratios in the conjugated diene-based polymer of the present embodiment are defined as mass ratios, to the total mass of the conjugated diene-based polymer, of the polymer segments obtained in a first polymerization step (P1) that is a step of producing the first polymer segment, and a second polymerization step (P2) that is a step of producing the second polymer segment described below.

Regarding a first polymer segment ratio ($r_1$) and a second polymer segment ratio ($r_2$) in the conjugated diene-based polymer of the present embodiment, the segment ratio ($r_1$) of the first polymer segment is preferably 20% by mass or more and 80% by mass or less, more preferably 30% by mass or more and 70% by mass or less, and further preferably 40% by mass or more and 60% by mass or less.

When the lower limit of the first polymer segment ratio ($r_1$) falls in the above-described range, the ratio of the first polymer segment in the conjugated diene-based polymer of the present embodiment falls in a preferable range, the flexibility of the conjugated diene-based polymer in a low temperature region obtained in the form of a vulcanizate is improved, and the vulcanizate tends to be excellent in abrasion resistance. When the first polymer segment ratio ($r_1$) satisfies the range of the upper limit, the second polymer segment ratio ($r_2$) in the conjugated diene-based polymer falls in a preferable range, and excellent wet grip performance tends to be obtained.

The segment ratio ($r_1$) of the first polymer segment in the conjugated diene-based polymer of the present embodiment can be controlled to fall in the above-described numerical range by adjusting polymerization conditions, such as the amount of a monomer to be added, and a polymerization time, employed in the first polymerization step (P1).

A method for introducing a plurality of polymer segments into a molecule of the conjugated diene-based polymer of the present embodiment is not especially limited, and an example includes a method in which a continuous solution polymerization method using a plurality of reactors arranged in series is employed with a conjugated diene compound, an aromatic vinyl compound, a polar material, and a solvent successively added to the respective reactors as described below. The substances to be successively added may be the same and different among the reactors.

(Glass Transition Temperature (Tg), and Difference between Extrapolated Onset Temperature and Extrapolated End Temperature of Glass Transition Temperature (Tg))

The conjugated diene-based polymer of the present embodiment has only one glass transition temperature (Tg) measured by differential scanning calorimetry (DSC), and a difference between the extrapolated onset temperature and the extrapolated end temperature of the glass transition temperature (Tg) is 15°C or more and 35°C or less. Since one conjugated diene-based polymer has glass transition caused in a wide temperature region, namely, has a region of relaxation from an elastic body to a viscous body in a wide temperature region, a vulcanizate thereof easily becomes viscous in a low temperature region, and thus an excellent low-temperature performance is obtained. In addition, the elastic region of the vulcanizate continues also in a high temperature region, and hence an excellent wet grip performance is obtained, and thus, these properties can be excellently balanced.

The conjugated diene-based polymer of the present embodiment has only one glass transition temperature (Tg) obtained by the DSC measurement as described above. It is effective, for having one glass transition temperature (Tg), that the conjugated diene-based polymer does not contain an isolated aromatic vinyl monomer unit (a segment consisting only of an aromatic vinyl monomer block, or an aromatic vinyl monomer unit), and that a random conjugated diene-based polymer having a high ratio of an aromatic vinyl monomer unit is not locally unevenly present therein.

For example, when a bond of aromatic vinyl monomer units is contained only in a portion corresponding to 30% by mass from the end of the conjugated diene-based polymer, and 40% by mass thereof corresponds to the aromatic vinyl monomer units, the conjugated diene-based polymer has two glass transition temperatures.

The conjugated diene-based polymer having only one glass transition temperature (Tg) means that the conjugated diene-based polymer is not separated in phase, and tends to exhibit a good low-temperature performance when in the form of a vulcanizate.

The glass transition temperature (Tg) of the conjugated diene-based polymer of the present embodiment indicates a point near a middle between the extrapolated onset temperature and the extrapolated end temperature of the

differential scanning calorimetry (DSC). The value of the measured Tg is preferably -75°C or more, and more preferably -70°C or more. Besides, the glass transition temperature (Tg) of the conjugated diene-based polymer of the present embodiment is preferably -45°C or less, and more preferably -50°C or less. The glass transition temperature (Tg) may fall in a range obtained by arbitrarily combining any of the upper limits and any of the lower limits described above. The glass transition temperature (Tg) of the conjugated diene-based polymer of the present embodiment is measured in accordance with ISO 22768:2006. More specifically, a DSC curve is recorded by measuring differential scanning calorimetry (DSC) with a temperature increased within a prescribed temperature range, and an infection point of the DSC curve is defined as the glass transition temperature. Specifically, it may be measured by a method described in the examples below.

The conjugated diene-based polymer of the present embodiment may contain a plastic component such as a resin or a process oil described below, and it is necessary to exclude such a component in the DSC measurement for obtaining the Tg of the conjugated diene-based polymer of the present embodiment.

The glass transition temperature (Tg) of the conjugated diene-based polymer varies depending on the amount of bound aromatic vinyl monomer unit of the conjugated diene-based polymer, and the amount of vinyl bond in bound conjugated diene. Specifically, the glass transition temperature (Tg) is increased by increasing the amount of bound aromatic vinyl monomer unit and the amount of vinyl bond in bound conjugated diene, and the glass transition temperature (Tg) is decreased by decreasing the amount of bound aromatic vinyl monomer unit, and the amount of vinyl bond in bound conjugated diene.

In the conjugated diene-based polymer of the present embodiment, the measured glass transition temperature (Tg) can be controlled to fall in a preferable range by controlling the above-described estimated Tg to a more suitable numerical range by the adjustment of the microstructure.

The extrapolated onset temperature of the glass transition temperature (Tg) of the conjugated diene-based polymer of the present embodiment is preferably -90°C or more, and more preferably -85°C or more. The extrapolated onset temperature is preferably -60°C or less, and more preferably -65°C or less. When the extrapolated onset temperature satisfies the range, a vulcanizate of the conjugated diene-based polymer of the present embodiment tends to be further excellent in tensile properties. The extrapolated end temperature of the glass transition temperature (Tg) of the conjugated diene-based polymer of the present embodiment is preferably -70°C or more, and more preferably -65°C or more. The extrapolated end temperature is preferably -40°C or less, and more preferably -45°C or less. When the extrapolated end temperature satisfies the range, a vulcanizate of the conjugated diene-based polymer of the present embodiment tends to be further excellent in a low hysteresis loss property.

The conjugated diene-based polymer of the present embodiment has only one glass transition temperature (Tg) obtained by the DSC measurement, and the difference between the extrapolated onset temperature and the extrapolated end temperature of the glass transition temperature is 15°C or more and 30°C or less. Thus, a vulcanizate obtained therefrom has a high hysteresis loss in a temperature region higher than the glass transition temperature, and hence tends to be excellent in the wet grip performance, and has a wide range of flexibility at a temperature lower than the glass transition temperature, and hence tends to be excellent in the low-temperature performance.

From the viewpoint of being excellent in both the wet grip performance and the low-temperature performance, the conjugated diene-based polymer of the present embodiment is a conjugated diene-based polymer in which a difference between the extrapolated onset temperature and the extrapolated end temperature of only one glass transition temperature is 15°C or more. The lower limit of the difference between the extrapolated onset temperature and the extrapolated end temperature is preferably 15.5°C or more, and more preferably 18°C or more. The upper limit is preferably 35°C or less, and more preferably 30°C or less.

The extrapolated onset temperature varies depending on the amount of vinyl bond $Y_1$ in bound conjugated diene of the first polymer segment. Specifically, when the amount of vinyl bond $Y_1$ in bound conjugated diene is increased, the extrapolated onset temperature increases. On the other hand, the extrapolated onset temperature decreases when an amount of bound aromatic vinyl monomer unit $X_1$, and the amount of vinyl bond $Y_1$ in bound conjugated diene of the first polymer segment are decreased.

For example, when $Y_1$ is 20 (mol%), the extrapolated onset temperature is - 76.5°C, and when $Y_1$ is 15 (mol%), the extrapolated onset temperature is -78.0°C.

Besides, the extrapolated end temperature varies depending on an amount of bound aromatic vinyl monomer unit $X_2$, and an amount of vinyl bond $Y_2$ in bound conjugated diene of the second polymer segment, and the second polymer segment ratio $r_2$. Specifically, the extrapolated end temperature increases when the amount of bound aromatic vinyl monomer unit $X_2$, the amount of vinyl bond $Y_2$ in bound conjugated diene, and the second polymer segment ratio $r_2$ are increased. On the other hand, the extrapolated end temperature decreases when the amount of bound aromatic vinyl monomer unit $X_2$, the amount of vinyl bond $Y_2$ in bound conjugated diene, and the second polymer segment ratio $r_2$ are decreased.

For example, when $r_2$ is 50 (% by mass), and a value calculated in accordance with the expression (iii) is -23, the extrapolated end temperature is - 53.0°C, and when $r_2$ is 50 (% by mass), and a value calculated in accordance with the expression (3) is -43, the extrapolated onset temperature is -58.0°C.

When a value calculated in accordance with the expression (iii) is -38, and $r_2$ is 55, the extrapolated end temperature is -46.0°C.

(Weight Average Molecular Weight)

A weight average molecular weight (Mw) of the conjugated diene-based polymer of the present embodiment measured by a GPC measurement method is preferably 27 $\times$ $10^4$ or more, more preferably 30 $\times$ $10^4$ or more, further preferably 40 $\times$ $10^4$ or more, and still further preferably 45 $\times$ $10^4$ or more. When the lower limit of the weight average molecular weight measured by the GPC measurement method satisfies the above-described range, a vulcanizate thereof tends to be excellent in abrasion resistance.

The weight average molecular weight is preferably 135 $\times$ $10^4$ or less, more preferably 90 $\times$ $10^4$ or less, and further preferably 70 $\times$ $10^4$ or less. When the upper limit of the weight average molecular weight satisfies the above-described range, the vulcanizate thereof tends to be more excellent in dispersibility of a filler therein.

The weight average molecular weight may fall in a range obtained by arbitrarily combining any of the upper limits and any of the lower limits described above. The weight average molecular weight of the conjugated diene-based polymer can be measured by a GPC measurement method, and specifically can be measured by a method described in the examples below.

(Number Average Molecular Weight)

A number average molecular weight of the conjugated diene-based polymer of the present embodiment measured by a GPC measurement method is preferably 17 $\times$ $10^4$ or more, more preferably 19 $\times$ $10^4$ or more, and further preferably 23 $\times$ $10^4$ or more. When the lower limit of the number average molecular weight measured by the GPC measurement method satisfies the above-described range, a vulcanizate thereof tends to be excellent in abrasion resistance. The number average molecular weight is preferably 80 $\times$ $10^4$ or less, more preferably 50 $\times$ $10^4$ or less, and further preferably 40 $\times$ $10^4$ or less. When the upper limit of the number average molecular weight satisfies the above-described range, the vulcanizate thereof tends to be more excellent in dispersibility of a filler therein. The number average molecular weight may fall in a range obtained by arbitrarily combining any of the upper limits and any of the lower limits described above. The number average molecular weight of the conjugated diene-based polymer can be measured by a GPC measurement method, and specifically can be measured by a method described in the examples below.

The weight average molecular weight and the number average molecular weight of the conjugated diene-based polymer can be controlled to fall in the above-described ranges by adjusting a ratio between the amount of a polymerization initiator to be used and the amount of the monomer to be used, and the type and the amount to be used of a coupling agent.

(Molecular Weight Distribution)

A molecular weight distribution of the conjugated diene-based polymer of the present embodiment is represented by a ratio of the weight average molecular weight (Mw) to the number average molecular weight (Mn). The molecular weight distribution of the conjugated diene-based polymer of the present embodiment is preferably 1.7 or more and 2.5 or less. A conjugated diene-based polymer having a molecular weight distribution falling in this range tends to be more excellent in processability in obtaining a vulcanizate therefrom.

The molecular weight distribution of the conjugated diene polymer of the present embodiment is more preferably 1.75 or more, and further preferably 1.8 or more. The molecular weight distribution is more preferably 2.4 or less, and further preferably 2.2 or less.

(Mooney Viscosity)

A Mooney viscosity measured at 100°C of the conjugated diene-based polymer of the present embodiment is preferably 30 or more and 150 or less, more preferably 60 or more and 130 or less, and further preferably 60 or more and 115 or less. When the Mooney viscosity falls in the above-described range, the flowability of the conjugated diene-based copolymer of the present embodiment reduces to obtain excellent moldability, and fracture performance and abrasion resistance of a vulcanizate thereof tend to be further improved. The Mooney viscosity of the conjugated diene-based polymer of the present embodiment can be measured by a method described in the examples below.

(Modification Ratio)

The conjugated diene-based polymer of the present embodiment preferably has a nitrogen atom, and more specifically has a modifying group having a nitrogen atom.

Herein, the term "modification ratio" refers to, when a mixture of a modified conjugated diene-based polymer and a non-modified conjugated diene-based polymer can be obtained by modifying a conjugated diene-based polymer with a modifier having a nitrogen atom, a content, expressed in % by mass, of a conjugated diene-based polymer component having, in a polymer molecule, a specific functional group having affinity or binding reactivity with a filler to the total amount of the mixture of the conjugated diene-based polymers. Accordingly, when the specific functional group has a nitrogen atom, the modification ratio indicates a mass ratio of a conjugated diene-based polymer containing a nitrogen atom to the total amount of the mixture of the conjugated diene-based polymers.

For example, when a conjugated diene-based polymer containing a modified conjugated diene-based polymer is obtained by reacting a terminal end of the conjugated diene-based polymer with a nitrogen atom-containing modifier, a mass ratio of a conjugated diene-based polymer having a nitrogen atom-containing functional group derived from the nitrogen atom-containing modifier to the total amount of the conjugated diene-based polymer corresponds to the modification ratio.

The modification ratio can be measured by chromatography capable of separating a functional group-containing modified component and a non-modified component.

An example of the method employing chromatography includes a method in which a column for gel permeation chromatography using, as a filler, a polar material adsorbing a specific functional group, such as silica, is used for performing quantitative determination by using internal standard of a non-adsorbed component for comparison.

More specifically, the modification ratio can be obtained by measuring an amount of adsorption onto a silica column based on a difference between a chromatogram measured on a sample solution containing a sample and low molecular weight internal standard polystyrene using a polystyrene-based gel column and a chromatogram measured using a silica-based column. More specifically, the modification ratio can be measured by a method described in the examples.

In the conjugated diene-based polymer of the present embodiment, the modification ratio can be controlled by adjusting the amount of the modifier to be added, and a reaction method.

For example, when a method in which polymerization is performed by using, as a polymerization initiator, an organic lithium compound having at least one nitrogen atom in a molecule described below, a method in which a monomer having at least one nitrogen atom in a molecule is copolymerized, and a method in which a modifier having a structural formula described below is used are combined, and polymerization conditions are controlled, and thus, a desired modification ratio can be obtained.

In the conjugated diene-based polymer of the present embodiment, from the viewpoint of a low hysteresis loss property of a vulcanizate thereof, the modification ratio is preferably 60% or more, more preferably 65% or more, and further preferably 70% or more with respect to the total amount of the conjugated diene-based polymer.

[Method for Producing Conjugated Diene-based Polymer]

An example of a method for producing a conjugated diene-based polymer of the present embodiment includes, for example, but is not limited to, a method, using two or more continuous reactors, including a first polymerization step (P1) of continuously forming a first polymer segment of the conjugated diene-based polymer with a conjugated diene compound, a polymerization initiator, and a polar material added to the continuous reactors; and a second polymerization step (P2) of forming a second polymer segment at an end of the first polymer segment with an aromatic vinyl compound and a polar material added to the continuous reactors.

The continuous reactors preferably have a configuration including two or more reactors.

(Polymerization Initiator)

As the polymerization initiator, at least an organic monolithium compound can be used.

Examples of the organic monolithium compound include, but are not limited to, organic monolithium compounds of a low molecular weight compound, and a soluble oligomer.

Examples of the organic monolithium compound also include, in terms of binding mode between an organic group and lithium therein, a compound having a carbon-lithium bond, a compound having a nitrogen-lithium bond, and a compound having a tin-lithium bond.

The amount of the organic monolithium compound to be used as the polymerization initiator is preferably determined depending on the molecular weight of a conjugated diene-based polymer or modified conjugated diene-based polymer to be obtained.

The amount of a monomer such as a conjugated diene compound to be used with respect to the amount of the polymerization initiator to be used relates to a degree of polymerization. Specifically, the amount of a monomer to be used with respect to the amount of the polymerization initiator to be used tends to relate to the number average molecular weight and the weight average molecular weight.

Accordingly, in order to increase the molecular weight, the amount of the polymerization initiator to be used may be adjusted to be decreased, and in order to decrease the molecular weight, the amount of the polymerization initiator to be used may be adjusted to be increased.

When a nitrogen atom is to be introduced into the conjugated diene-based polymer by using the polymerization initiator, the organic monolithium compound is preferably an alkyllithium compound having a substituted amino group, or dialkylamino lithium from the viewpoint that the compound is used in one of methods for introducing a nitrogen atom into a conjugated diene-based polymer.

In this case, a conjugated diene-based polymer having a nitrogen atom of an amino group at the polymerization start end is obtained.

A substituted amino group refers to an amino group having no active hydrogen, or having a structure including protected active hydrogen.

Examples of the alkyllithium compound containing an amino group having no active hydrogen include, but are not limited to, 3-dimethylaminopropyllithium, 3-diethylaminopropyllithium, 4-(methylpropylamino)butyllithium and 4-hexamethyleneiminobutyllithium.

Examples of the alkyllithium compound containing an amino group having the structure including protected active hydrogen include, but are not limited to, 3-bistrimethylsilylaminopropyllithium and 4-trimethylsilylmethylaminobutyllithium.

Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo [3.2.1] octane, and 1-lithio-1,2,3,6-tetrahydropyridine.

Such an organic monolithium compound having a substituted amino group can be reacted with a small amount of a polymerizable monomer, such as 1,3-butadiene, isoprene or styrene, to be used also as an organic monolithium compound of a soluble oligomer.

Alternatively, the polymerization initiator may be one produced by reacting an aromatic vinyl compound having a substituted amino group and/or a conjugated diene compound with an organic monolithium compound, and may be one in which a functional group can be introduced into one end of a polymer chain.

The organic monolithium compound is preferably an alkyllithium compound from the viewpoints of industrial availability and polymerization reaction controllability. In this case, a conjugated diene-based polymer having an alkyl group on the polymerization start end is obtained.

Examples of the alkyllithium compound include, but are not limited to, n-butyllithium, sec-butyllithium, tert-butyllithium, n-hexyllithium, benzyllithium, phenyllithium, and stilbene lithium.

As the alkyllithium compound, from the viewpoints of industrial availability and controllability of a polymerization reaction, n-butyllithium and sec-butyllithium are preferred.

One of these organic monolithium compounds may be singly used, or two or more of these may be used together. Alternatively, another organic metal compound may be used together.

Examples of the another organic metal compound include alkaline earth metal compounds, other alkaline metal compounds, and other organic metal compounds.

Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.

Examples of the organic magnesium compounds include dibutyl magnesium and ethyl butyl magnesium. Examples of the other organic metal compounds include organic aluminum compounds.

In the method for producing a conjugated diene-based polymer of the present embodiment, a coupling step (P3) of reacting a coupling agent with the conjugated diene-based polymer may be performed after the second polymerization step (P2).

The weight average molecular weight of the conjugated diene-based polymer before the coupling step (P3) can be controlled by adjusting the amount of the polymerization initiator to be used with respect to the conjugated diene compound and the aromatic vinyl compound, and as the amount of the polymerization initiator to be used is decreased, the weight average molecular weight tends to decrease. The amount of the polymerization initiator to be used is preferably 0.15 mol or more and 1.5 mol or less assuming that the total mass of the conjugated diene compound and the aromatic vinyl compound to be used is 100 kg.

(Polar Material)

In the polymerization step, a polar material may be added. The polar material can make the aromatic vinyl

compound randomly copolymerized with the conjugated diene compound, and the polar material tends to be usable as a vinylation agent for controlling the microstructure of a conjugated diene portion. Besides, it also tends to have an effect on acceleration of the polymerization reaction or the like.

Examples of the polar material include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine.

One of these polar materials may be singly used, or two or more of these may be used together.

The amount of the polar material to be used is not especially limited, and can be selected in accordance with the purpose or the like, and is preferably 0.01 mol or more and 100 mol or less with respect to 1 mol of the polymerization initiator.

Such a polar material (vinylation agent) can be used, as an adjuster for the microstructure of the conjugated diene portion of the conjugated diene-based polymer, in an appropriate amount in accordance with a desired amount of vinyl bond. Many polar materials exhibit a randomizing effect effective in copolymerization of a conjugated diene compound and an aromatic vinyl compound simultaneously, and tends to be able to adjust randomness of an aromatic vinyl monomer unit and a conjugated diene monomer unit in each polymer segment.

As a method for randomizing a conjugated diene monomer unit and an aromatic vinyl monomer unit, for example, as described in Japanese Patent Laid-Open No. 59-140211, a method in which a copolymerization reaction is started using the whole amount of styrene and a part of 1,3-butadiene, with the rest of the 1,3-butadiene intermittently added during the copolymerization reaction may be employed. The 1,3-butadiene added here is added for obtaining a high modification ratio in the coupling step (P3), and need not always form a polymer segment.

A polymerization temperature employed in the polymerization step is preferably a temperature at which living anion polymerization proceeds, and from the viewpoint of productivity, is preferably 0°C or more, and more preferably 120°C or less. When the temperature is within this range, there is a tendency that a sufficient amount of modifier can be reacted on the active end after completing the polymerization. The temperature is further preferably 50°C or more and 100°C or less.

(Polymer Segment Polymerization Step)

In a suitable aspect of the method for producing a conjugated diene-based polymer of the present embodiment, the polymerization step is performed in a continuous reactor system using two or more continuous reactors, and the first polymerization step (P1) of obtaining a first polymer segment, and the second polymerization step (P2) of obtaining a second polymer segment are performed as described above.

Each of the first polymerization step (P1) and the second polymerization step (P2) can be performed by using one reactor, or two or more connected reactors. The shape of the reactor may be any of tank and tubular reactors equipped with a stirrer. It is not essential to assign the first polymerization step (P1) and the second polymerization step (P2) to the respective reactors, and for example, the second polymerization step (P2) may be set to start on the downstream side of a first reactor. The respective reactors may have a temperature control function.

In the continuous reactor system, one reactor, or two or more connected reactors can be used. As the continuous reactor, for example, a tank or tubular reactor equipped with a stirrer is used. In the continuous reactor system, a monomer, an inert solvent, and a polymerization initiator are preferably continuously fed to the reactor, a polymer solution containing a conjugated diene-based polymer is obtained in the reactor, and the conjugated diene-based polymer solution is continuously discharged.

In the continuous reactor system, when a monomer, an inert solvent, and a polar material are newly added to a pipe connecting reactors in using continuous tank reactors connected in series, and to a halfway portion of a reactor in using a tubular reactor, a polymer segment different from that having been synthesized in the previous polymerization step can be introduced into the conjugated diene-based polymer. Besides, a binding mode of a conjugated diene compound is changed also by changing the polymerization temperature employed in a reactor, and thus, a different polymer segment can be introduced into the conjugated diene-based polymer.

In the method for producing a conjugated diene-based polymer of the present embodiment, for obtaining a conjugated diene-based polymer, a continuous mode in which a polymer is continuously discharged to be supplied to a next reaction in a short period of time is preferably employed. More preferably, a reaction system in which continuous tank reactors are connected in series is used, and thus, a residence time distribution in the reactors is increased, and the molecular weight distribution of each polymer segment increases. In addition, the randomizing effect for the aromatic vinyl compound is increased. As a result, in a vulcanizate obtained therefrom, the microphase separation of the conjugated diene-based polymer is suppressed to obtain only one glass transition temperature, and at the same time, the wet grip

performance and the low-temperature performance tend to be excellent.

In the first polymerization step (P1) of producing a first polymer segment, a conjugated diene compound, a polymerization initiator, and a polar material are added to the reactor to continuously perform polymerization. A conjugated diene polymer solution resulting from the first polymerization step (P1) continuously flows out of the reactor to be fed to a next step. The destination of feeding is, for example, preferably the second polymerization step (P2) of forming a second polymer segment.

In the second polymerization step (P2) for a second polymer segment, one reactor, or two or more connected reactors are used in the same manner as in the polymerization step (P1). To a conjugated diene-based polymer of the first polymer segment obtained in the first polymerization step (P1), an aromatic vinyl compound and an additional polar material are added to continuously perform polymerization.

A conjugated diene polymer solution resulting from the second polymerization step (P2) continuously flows out of the reactor to be fed to a next step.

The destination of feeding is, for example, preferably the coupling step (P3) described below.

The conjugated diene-based polymer of the present embodiment can be produced also by the following method.

For forming a first polymer segment and a second polymer segment in the conjugated diene-based polymer, a continuous polymerization method using two or more reactors is employed. For example, in the first polymerization step (P1) of producing the first polymer segment, an aromatic vinyl compound, a conjugated diene compound, a polymerization initiator, and a polar material are added to a first reactor to continuously perform polymerization, and in the second polymerization step (P2) of forming the second polymer segment, without adding an additional aromatic vinyl compound to second and following reactors, conditions for the polymerization step employed in the respective reactors are changed. Also in this manner, the conjugated diene-based polymer of the present embodiment can be produced.

Specifically, a polymerization reaction rate in the first reactor used in the first polymerization step (P1) is decreased as described below to cause, in the second polymerization step (P2) or later, polymerization of the conjugated diene compound and the aromatic vinyl compound that have not been reacted in the first polymerization step (P1). In this manner, the first polymer segment and the second polymer segment can be formed in the conjugated diene polymer.

More specifically, the above-described production method can be more easily performed by setting the polymerization reaction rate in the first polymerization step (P1) to 60% or less.

When a method described in International Publication No. WO2018/128285 is employed, the molecular weight distribution in a conjugated diene-based polymer reduces.

When the molecular weight distribution of a conjugated diene-based polymer is 1.7 or more, a vulcanizate thereof tends to be excellent in processability.

In the method for producing a conjugated diene-based polymer of the present embodiment, in the second polymerization step (P2) following the first polymerization step (P1), it is preferable that an aromatic vinyl compound and an additional polar material are added to a conjugated diene-based polymer of the first polymer segment obtained in the first polymerization step (P1) to continuously perform the polymerization. In the above-described production method, differently from the production method in which the second polymerization step (P2) is performed with an aromatic vinyl compound added in the first polymerization step (P1), the polymerization reaction rate in the first polymerization step can be improved. As a result, the molecular weight distribution of the conjugated diene-based polymer can be set to 1.7 or more, and thus, a vulcanizate thereof tends to be excellent in processability.

In the method for producing a conjugated diene-based polymer of the present embodiment, the polymerization reaction rate in the first polymerization step (P1) is preferably 75% or more and 95% or less, more preferably 80% or more and 94% or less, and further preferably 85% or more and 93% or less. When continuous polymerization is performed by using two or more continuous reactors, and the above-described polymerization reaction rate is employed, there is a tendency that the molecular weight distribution of the resultant conjugated diene-based polymer can be increased, and that the processability of a vulcanizate thereof can be improved.

In the method for producing a conjugated diene-based polymer of the present embodiment, a mass ratio of the conjugated diene compound added in the first polymerization step (P1) to the total amount of the conjugated diene compound and the aromatic vinyl compound to be added is preferably 20% by mass or more and 80% by mass or less, more preferably 30% by mass or more and 70% by mass or less, and further preferably 40% by mass or more and 60% by mass or less.

When the polymerization step is performed with the ratio falling in this range, the first polymer segment ratio in the conjugated diene-based polymer can be set to preferably 20% by mass or more and 80% by mass or less, more preferably 30% by mass or more and 70% by mass or less, and further preferably 40% by mass or more and 60% by mass or less.

When the first polymer segment ratio satisfies the above-described numerical range, the abrasion resistance obtained in the form of a vulcanizate tends to be excellent.

The polymerization reaction rate in the first polymerization step (P1) can be calculated by using the following expression (7).

For example, the polymerization reaction rate in the first polymerization step (P1) can be calculated based on a

solid content of a conjugated diene-based polymer obtained per time after the first polymerization step (P1) with respect to the total amount of the conjugated diene compound and the aromatic vinyl compound to be added per time in the first polymerization step (P1).

The solid content (m1) in the conjugated diene-based polymer solution is obtained based on the amount of a non-volatile component in the polymer solution flowing through a discharge port of the first polymerization step (P1) in a unit time.

Specifically, the whole amount of the polymer solution flowing through the discharge port of the first polymerization step (P1) is collected for 3 minutes, and immediately after that, a polymerization terminator is added. Thereafter, the collected solution is transferred to a heat resistant dish or the like, and a mass M1 of a solid remaining after drying the resultant in an oven at 140°C for 30 minutes or more is measured. The solid content (m1) is obtained by using the following expressions (7) and (8) in combination.

$$\text{Polymerization reaction rate (\%) in P1} = \frac{\text{solid content m1[g/min]}}{\text{conjugated diene compound added to first reactor [g/min]} + \text{aromatic vinyl compound added to first reactor [g/min]}} \quad (7)$$

$$\text{Polymerization reaction rate (\%) in P1} = \frac{\text{mass of solid M1[g/3min]} \div 3}{\text{conjugated diene compound added to first reactor [g/min]} + \text{aromatic vinyl compound added to first reactor [g/min]}} \quad (8)$$

In the second polymerization step (P2) of forming the second polymer segment, an aromatic vinyl compound is preferably added as described above.

By controlling a mass ratio of the amount of the aromatic vinyl compound to be added to the amount of the conjugated diene compound to be added in the second polymerization step (P2), a ratio of an aromatic vinyl monomer unit in the second polymer segment can be controlled, and thus, an elastic property of the resultant conjugated diene-based polymer in a high temperature region tends to be able to be retained. Specifically, the lower limit of the mass ratio is preferably 0.15 or more, more preferably 0.25 or more, and further preferably 0.30 or more.

When the amount of the aromatic vinyl compound to be added in the second polymerization step (P2) is increased, the amount of bound aromatic vinyl monomer unit in the second polymer segment in the conjugated diene-based polymer is increased, and a vulcanizate thereof tends to be excellent in the wet grip performance.

The upper limit of the mass ratio of the amount of the aromatic vinyl compound to be added to the amount of the conjugated diene compound to be added in the second polymerization step (P2) is preferably 0.70 or less, more preferably 0.65 or less, and further preferably 0.60 or less.

When the amount of the aromatic vinyl compound to be added in the second polymerization step (P2) is within the prescribed range, the amount of bound aromatic vinyl monomer unit in the second polymer segment in the conjugated diene-based polymer can be set to a desired range, and a vulcanizate thereof tends to be excellent in steering stability.

In the second polymerization step (P2), one, or two or more polar materials may be added. Thus, the amount of vinyl bond $Y_2$ in bound conjugated diene in the second polymer segment is increased, and a vulcanizate thereof tends to be improved in the wet grip performance.

The amount of the polar material to be added in the second polymerization step (P2) is not especially limited, and can be selected in accordance with the purpose or the like, and a total amount thereof together with the polar material added in the first polymerization step (P1) is preferably 0.01 mol or more and 100 mol or less per mole of the polymerization initiator. Besides, from the viewpoint that a bound aromatic vinyl compound is reacted in the second polymerization step (P2) so as not to form a bound aromatic vinyl compound monomer into a block, the amount of the polar material to be added in the second polymerization step (P2) is preferably larger than that added in the first polymerization step (P1). Although the relationship in amount is not especially limited, for example, the former amount is larger by preferably more than 1.0 time and 25 times or less, and more preferably 1.5 times or more and 20 times or less.

The production of a conjugated diene-based polymer of the present embodiment may include prescribed steps respectively before and after the first polymerization step (P1) and before and after the second polymerization step (P2). For example, a polymerization step of forming a polymer segment different from the first polymer segment and the second polymer segment may be included.

From the viewpoint of a modification ratio employed in the coupling step described below, the polymerization steps are performed preferably in the order of the first polymerization step (P1) and the second polymerization step (P2), but the order is not limited thereto. For example, when the first polymerization step (P1) is performed at a high polymerization temperature without adding an aromatic vinyl compound after performing the second polymerization step (P2), a modified conjugated diene-based polymer is obtained by performing the coupling step after obtaining the

second polymer segment and the first polymer segment.

From the viewpoint of reaction controllability, a conversion rate is preferably high in each polymerization step.

(Coupling Step (P3))

In the method for producing a conjugated diene-based polymer of the present embodiment, a step of performing coupling on an active end of the conjugated diene-based polymer obtained through the above-described polymerization steps with a coupling agent, such as a tri- or higher functional reactive compound, and/or a step of modifying the active end with a modifier having a nitrogen atom-containing group (preferably, a coupling agent having a nitrogen atom-containing group) may be performed.

Hereinafter, the step of performing coupling and/or the step of modifying will be referred to as the coupling step (P3).

In the coupling step (P3), one end of the active end of the conjugated diene-based polymer is subjected to modification reaction with a coupling agent or a modifier having a nitrogen atom, and thus, a modified conjugated diene-based polymer is obtained.

<Coupling Agent>

In the method for producing a conjugated diene-based polymer of the present embodiment, the coupling agent used in the coupling step may have any structure as long as it is a tri- or higher functional reactive compound, and is preferably a tri- or higher functional reactive compound having a silicon atom.

Examples of the tri- or higher functional reactive compound having a silicon atom include, but are not limited to, a halogenated silane compound, an epoxidized silane compound, a vinylated silane compound, an alkoxysilane compound, and an alkoxysilane compound containing a nitrogen-containing group, and an aminoalkoxysilane compound is preferred.

Examples of the halogenated silane compound used as the coupling agent include, but are not limited to, methyltrichlorosilane, tetrachlorosilane, tris(trimethylsiloxy)chlorosilane, tris(dimethylamino)chlorosilane, hexachlorodisilane, bis(trichlorosilyl)methane, 1,2-bis(trichlorosilyl)ethane, 1,2-bis(methyldichlorosilyl)ethane, 1,4-bis(trichlorosilyl) butane, and 1,4-bis(methyldichlorosilyl)butane.

Examples of the epoxidized silane compound used as the coupling agent include, but are not limited to, 3-glycidoxypropyltrimethoxysilane, 3-glycidoxypropyltriethoxysilane, 3-glycidoxypropylmethyldiethoxysilane, and epoxymodified silicone.

<Modifier Having Nitrogen Atom-containing Group>

Examples of the modifier having a nitrogen atom-containing group include, but are not limited to, an isocyanate compound, an isothiocyanate compound, an isocyanuric acid derivative, a nitrogen atom-containing carbonyl compound, a nitrogen atom-containing vinyl compound, and a nitrogen atom-containing epoxy compound.

In the modifier containing a nitrogen atom-containing group, the nitrogen atom-containing group is preferably an amine compound not having active hydrogen, and examples include a tertiary amine compound, a protected amine compound in which the active hydrogen is substituted with a protecting group, an imine compound represented by a general formula, -N=C, and an alkoxysilane compound bonded to the nitrogen atom-containing group.

Examples of the isocyanate compound used as the modifier having a nitrogen atom-containing group include, but are not limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isocyanuric acid derivative used as the modifier having a nitrogen atom-containing group include, but are not limited to, 1,3,5-tris(3-trimethoxysilylpropyl)isocyanurate, 1,3,5-tris(3-triethoxysilylpropyl)isocyanurate, 1,3,5-tri(oxiran-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

Examples of the carbonyl compound used as the modifier having a nitrogen atom-containing group include, but are not limited to, 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino)benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

Examples of the vinyl compound used as the modifier having a nitrogen atom-containing group include, but are not limited to, N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

An example of the epoxy compound used as the modifier having a nitrogen atom-containing group includes, but is not limited to, an epoxy group-containing hydrocarbon compound bonded to an amino group, which may further have an epoxy group bonded to an ether group.

An example of such an epoxy compound includes, but is not limited to, an epoxy compound represented by the following general formula (a):

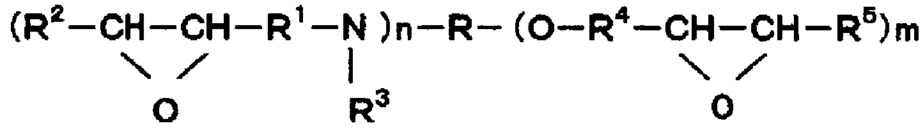

(a)

In the formula (a), R represents a bi- or higher valent hydrocarbon group, or a bi- or higher valent organic group having at least one polar group selected from a polar group having oxygen such as ether, epoxy or ketone, a polar group having sulfur such as thioether or thioketone, and a polar group having nitrogen such as a tertiary amino group or an imino group.

The bi- or higher valent hydrocarbon group is an optionally saturated or unsaturated linear, branched or cyclic hydrocarbon group, and encompasses an alkylene group, an alkenylene group, a phenylene group, and the like. A hydrocarbon group having from 1 to 20 carbon atoms is preferred. Examples thereof include groups such as methylene, ethylene, butylene, cyclohexylene, 1,3-bis(methylene)-cyclohexane, 1,3-bis(ethylene)-cyclohexane, o-, m-, or p-phenylene, m-, or p-xylene, and bis(phenylene)-methane.

In the formula (a), $R^1$ and $R^4$ are a hydrocarbon group having from 1 to 10 carbon atoms, and $R^1$ and $R^4$ are optionally the same or different.

In the formula (a), $R^2$ and $R^5$ are hydrogen, or a hydrocarbon group having from 1 to 10 carbon atoms, and $R^2$ and $R^5$ are optionally the same or different.

In the formula (a), $R^3$ is a hydrocarbon group having from 1 to 10 carbon atoms, or a structure represented by the following formula (a1).

$R^1$, $R^2$, and $R^3$ may be a cyclic structure mutually bonded.

When $R^3$ is a hydrocarbon group, $R^3$ may be a cyclic structure mutually bonded to R. In the cyclic structure, N bonded to $R^3$ may be directly bonded to R.

In the formula (a), n is an integer of 1 or more, and m is 0, or an integer of 1 or more.

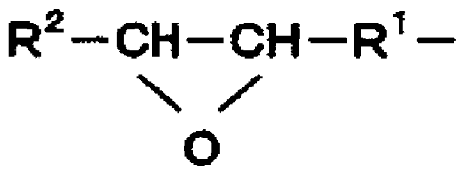

(a1)

In the formula (a1), $R^1$ and $R^2$ are defined in the same manner as $R^1$ and $R^2$ of the formula (a), and $R^1$ and $R^2$ are optionally the same or different.

The epoxy compound used as the modifier having a nitrogen atom-containing group preferably has an epoxy group-containing hydrocarbon group, and more preferably has a glycidyl group-containing hydrocarbon group.

An epoxy group-containing hydrocarbon group bonded to an amino group or an ether group is not especially limited, and examples thereof include a glycidylamino group, a diglycidylamino group, and a glycidoxy group. The epoxy compound further preferably used as the modifier is any of epoxy group-containing compounds respectively containing a glycidylamino group or a diglycidylamino group, and a glycidoxy group, and an example thereof includes a compound represented by the following general formula (a2):

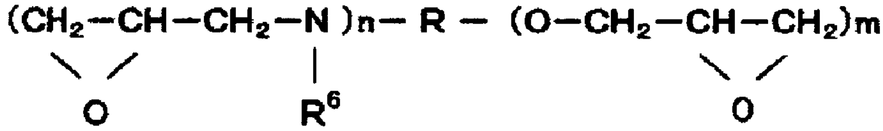

(a2)

In the formula (a2), R is defined in the same manner as R of the formula (a), and $R^6$ is a hydrocarbon group having from 1 to 10 carbon atoms, or a structure represented by the following formula (a3).

When $R^6$ is a hydrocarbon group, $R^6$ may be a cyclic structure mutually bonded to R, and in this case, N bonded to $R^6$ may be directly bonded to R.

In the formula (a2), n is an integer of 1 or more, and m is 0, or an integer of 1 or more.

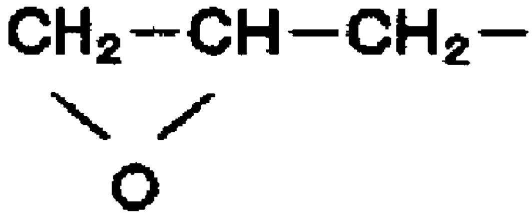

(a3)

The epoxy compound used as the modifier having a nitrogen atom-containing group is particularly preferably a compound having one or more diglycidylamino groups, and one or more glycidoxy groups in a molecule.

Examples of the epoxy compound used as the modifier having a nitrogen atom-containing group include, but are not limited to, N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl)aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethylcyclohexane. Among these, N,N-diglycidyl-4-glycidoxyaniline, and 1,3-bis(N,N-diglycidylaminomethyl)cyclohexane are particularly preferred.

From the viewpoint that the effects of the present embodiment are effectively and definitely exhibited, the modifier is preferably an alkoxysilane compound having a nitrogen atom-containing group. Examples of such a modifier include, but are not limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl)amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino)methyl-1,6-dioxa-2-silacyclooctane.

Particularly preferable examples of the alkoxysilane compound having a nitrogen atom-containing group include the following:

Specific examples include tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also designated as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane) propyl] ether, (3-trimethoxysilylpropyl) phosphate, and bis(3-trimethoxysilylpropyl)-[3-(2,2-dimethoxy-1-aza-2-silacyclopentane)propyl]phosphate.

Other examples include bis[3-(2,2-dimethoxy-1-aza-2-silacyclopentane)propyl]-(3-trimethoxysilylpropyl)phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propan-1-amine, N-benzylidene-3-(trimethoxysilyl)propan-1-amine, 1,1-(1,4-phenylene)bis(N-(3-(triethoxysilyl)propyl) methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Still other examples include 1-methyl-4-[3-(trimethoxysilyl)propyl]piperazine, 1-methyl-4-[3-(triethoxysilyl)propyl]piperazine, 1-methyl-4-[3-(methyldimethoxysilyl)propyl]piperazine, 3,3'-(1,1,3,3-tetramethoxydisiloxane-1,3-diyl) bis(N,N-dimethylpropan-1-amine), 3,3'-(1,1,3,3-tetraethoxydisiloxane-1,3-diyl) bis(N,N-dimethylpropan-1-amine), 3,3'-(1,1,3,3-tetrapropoxydisiloxane-1,3-diyl) bis(N,N-dimethylpropan-1-amine), 3,3'-(1,1,3,3-tetramethoxydisiloxane-1,3-diyl) bis(N,N-diethylpropan-1-amine), 3,3'-(1,1,3,3-tetramethoxydisiloxane-1,3-diyl) bis(N,N-dipropylpropan-1-amine), and 3,3'-(1,1,3,3-tetraethoxydisiloxane-1,3-diyl) bis(N,N-diethylpropan-1-amine).

Still other examples include 3,3'-(1,1,3,3-tetrapropoxydisiloxane-1,3-diyl) bis(N,N-diethylpropan-1-amine), 3,3'-(1,1,3,3-tetraethoxydisiloxane-1,3-diyl) bis(N,N-dipropylpropan-1-amine), 3,3'-(1,1,3,3-tetrapropoxydisiloxane-1,3-diyl) bis(N,N-dipropylpropan-1-amine), 3,3'-(1,1,3,3-tetramethoxydisiloxane-1,3-diyl) bis(N,N-diethylmethan-1-amine), 3,3'-(1,1,3,3-tetraethoxydisiloxane-1,3-diyl) bis(N,N-diethylmethan-1-amine), 3,3'-(1,1,3,3-tetrapropoxydisiloxane-1,3-diyl) bis(N,N-diethylmethan-1-amine), 3,3'-(1,1,3,3-tetramethoxydisiloxane-1,3-diyl) bis(N,N-dimethylmethan-1-amine), 3,3'-(1,1,3,3-tetramethoxydisiloxane-1,3-diyl) bis(N,N-dipropylmethan-1-amine), 3,3'-(1,1,3,3-tetrapropoxydisiloxane-1,3-diyl) bis(N,N-dimethylmethan-1-amine), 3,3'-(1,1,3,3-tetrapropoxydisiloxane-1,3-diyl) bis(N,N-dipropylmethan-1-amine), 3,3'-(1,1,3,3-tetraethoxydisiloxane-1,3-diyl) bis(N,N-dimethylmethan-1-amine), 3,3'-(1,1,3,3-tetraethoxydisiloxane-1,3-diyl) bis(N,N-dipropylmethan-1-amine), 1,3-bis(3-(1H-imidazol-1-yl)propyl) 1,1,3,3-tetramethoxydisiloxane, 1,3-bis(3-(1H-imidazol-1-yl)propyl) 1,1,3,3-tetraethoxydisiloxane, and 1,3-bis(3-(1H-imidazol-1-yl)propyl) 1,1,3,3-tetrapropoxydisiloxane.

In coupling modifiers having a nitrogen atom-containing group, an example of a protected amine compound in which active hydrogen is substituted with a protecting group includes a compound having alkoxysilane and protected amine in a molecule.

Examples of such a compound include, but are not limited to, N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, and 2,2-dimethoxy-1-methyl-1-aza-2-silacyclopentane.

Other examples include N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl) propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3methyl(dimethoxysilyl)propyl)methanamine), 1,1-(1,4-phenylene) bis(N-(3methyl(diethoxysilyl)propyl)methanamine), 2-ethoxy-2-methyl-1-(benzylideneaminoethyl)-1-aza-2-silacyclopentane, 2-methoxy-2-methyl-1-(methylisobutylideneaminoethyl)-1-aza-2-silacyclopentane, 1-trimethylsilyl-4-[3-(trimethoxysilyl)propyl]piperazine, and 1-trimethylsilyl-4-[3-(triethoxysilyl)propyl]piperazine.

In the method for producing a conjugated diene-based polymer of the present embodiment, when the coupling step is performed, it is further preferable that a modifier having a nitrogen atom-containing group represented by any one of

the following formulas (A) to (D) is used in the coupling step.

One of these may be singly used, or two or more of these may be used in combination.

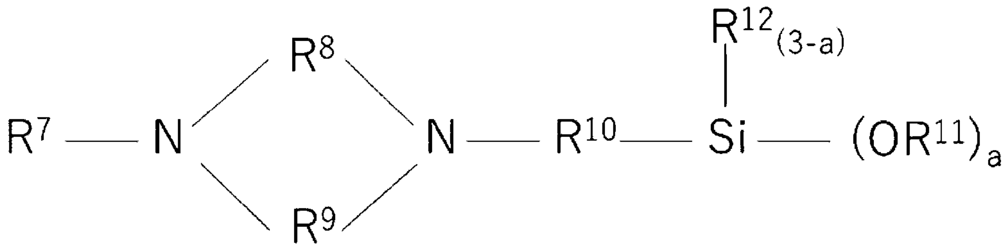

(A)

Here, $R^{10}$ and $R^{11}$ are a hydrocarbon group having from 1 to 12 carbon atoms, optionally have an unsaturated bond therein, and are optionally the same or different, and $R^{12}$ is a hydrocarbon group having from 1 to 20 carbon atoms.

$R^8$ and $R^9$ are an aliphatic hydrocarbon group having from 1 to 6 carbon atoms, optionally have an unsaturated bond therein, and are optionally the same or different.

$R^7$ is a hydrocarbon group having from 1 to 20 carbon atoms optionally substituted with an organic group containing Si, O, or N, and having no active hydrogen, and optionally has an unsaturated bond therein.

a is an integer of from 1 to 3.

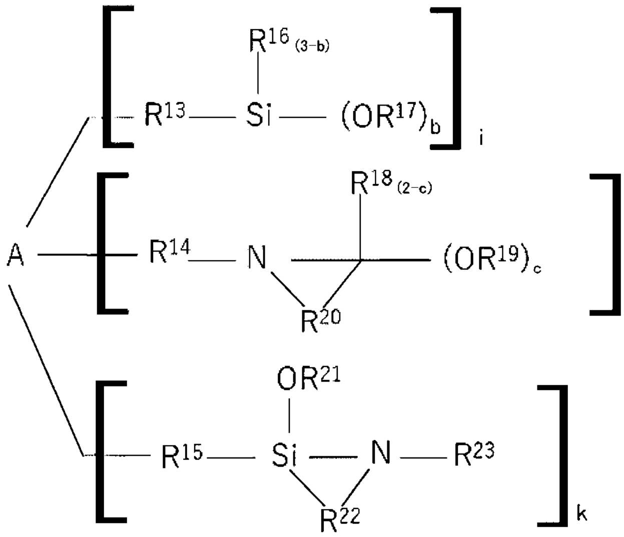

(B)

In the formula (B), A represents a hydrocarbon group having from 1 to 20 carbon atoms, or an organic group that has at least one atom selected from the group consisting of an oxygen atom, a nitrogen atom, a silicon atom, a sulfur atom, and a phosphorus atom, and has no active hydrogen.

$R^{13}$, $R^{14}$, and $R^{15}$ each independently represent a single bond, or an alkylene group having from 1 to 20 carbon atoms.

$R^{16}$, $R^{17}$, $R^{18}$, $R^{19}$, and $R^{21}$ each independently represent an alkyl group having from 1 to 20 carbon atoms.

$R^{20}$ and $R^{22}$ each independently represent an alkylene group having from 1 to 20 carbon atoms.

$R^{23}$ each independently represents an alkyl group having from 1 to 20 carbon atoms, or a trialkylsilyl group.

b each independently represents an integer of from 1 to 3, c each independently represents 1 or 2, i represents an integer of from 0 to 6, j represents an integer of from 0 to 6, k represents an integer of from 0 to 6, and a sum of i, j, and k is an integer of from 4 to 10.

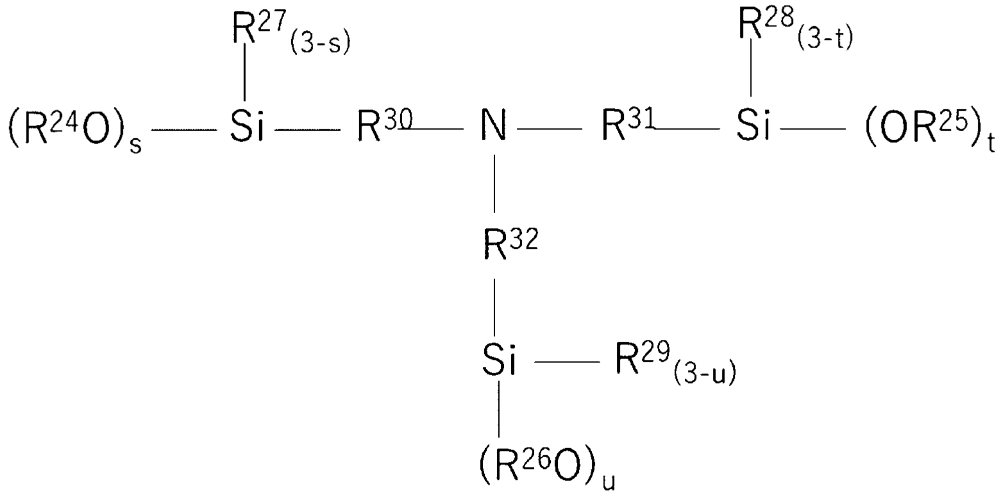

(C)

In the formula (C), $R^{24}$, $R^{25}$, $R^{26}$, $R^{27}$, $R^{28}$, and $R^{29}$ each independently represent an alkyl group having from 1 to 20 carbon atoms, or an aryl group having from 6 to 20 carbon atoms.

$R^{30}$, $R^{31}$, and $R^{32}$ each independently represent an alkylene group having from 1 to 20 carbon atoms.

s, t, and u each independently represent an integer of from 1 to 3, and a sum of s, t, and u is an integer of 4 or more.

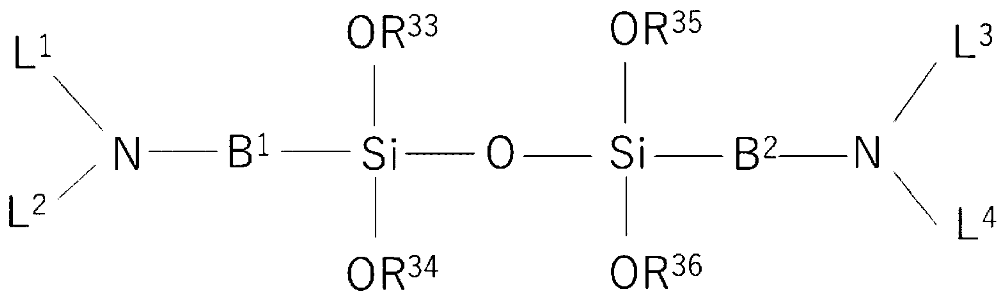

(D)

In the formula (D), $B^1$ and $B^2$ each independently represent a bivalent hydrocarbon group having from 1 to 20 carbon atoms containing or not containing an oxygen atom.

$R^{33}$ to $R^{36}$ each independently represent a monovalent hydrocarbon group having 1 to 20 carbon atoms.

$L^1$ to $L^4$ each independently represent a bivalent, trivalent, or tetravalent alkylsilyl group substituted with an alkyl group having from 1 to 10 carbon atoms, or a monovalent hydrocarbon group having from 1 to 20 carbon atoms, or $L^1$ and $L^2$, and $L^3$ and $L^4$ are optionally mutually bonded to form a ring having from 1 to 5 carbon atoms, and when $L^1$ and $L^2$, and $L^3$ and $L^4$ are mutually bonded to form a ring, the ring thus formed optionally contains from 1 to 3 hetero atoms of one or more selected from the group consisting of N, O, and S.

Specifically, in the formula (D), $B^1$ and $B^2$ are each independently an alkylene group having from 1 to 10 carbon atoms, $R^{33}$ to $R^{36}$ are each independently an alkyl group having from 1 to 10 carbon atoms, $L^1$ to $L^4$ are each independently a tetravalent alkylsilyl group substituted with an alkyl group having from 1 to 5 carbon atoms, or an alkyl group having from 1 to 10 carbon atoms, or $L^1$ and $L^2$, and $L^3$ and $L^4$ are optionally mutually bonded to form a ring having from 1 to 3 carbon atoms, and when $L^1$ and $L^2$, and $L^3$ and $L^4$ are mutually bonded to form a ring, the ring thus formed optionally contains from 1 to 3 hetero atoms of one or more selected from the group consisting of N, O, and S.

Examples of the coupling modifier represented by the formula (A) include, but are not limited to, 1-methyl-4-[3-(trimethoxysilyl)propyl]piperazine, 1-methyl-4-[3-(triethoxysilyl)propyl]piperazine, 1-propyl-4-[3-(trimethoxysilyl)propyl]piperazine, 1-propyl-4-[3-(triethoxysilyl)propyl]piperazine, 1-trimethylsilyl-4-[3-(trimethoxysilyl)propyl]piperazine, and 1-trimethylsilyl-4-[3-(triethoxysilyl)propyl]piperazine.

Among these, one represented by the formula (A) wherein a is 3 is preferred from the viewpoint of increasing reactivity and interaction between the conjugated diene-based polymer of the present embodiment and an inorganic filler such as silica, and from the viewpoint of increasing processability.

A reaction temperature and a reaction time in the coupling step using the coupling modifier represented by the formula (A) are not especially limited, and the reaction is performed at preferably 0°C or more and 120°C or less, and for preferably 30 seconds or more.

The amount of the coupling modifier represented by the formula (A) to be added corresponds to a total mole number of an alkoxy group bonded to a silyl group of the compound represented by the formula (A) of preferably 0.2 or more times and 2.0 or less times, more preferably 0.3 or more times and 1.5 or less times, and further preferably 0.4 or more times and 1.0 or less times of a mole number of the polymerization initiator to be added. From the viewpoint that the thus obtained modified conjugated diene-based polymer has a molecular weight falling in a more preferable range, the amount is preferably 0.2 or more times, and from the viewpoint of storage stability in long-term storage, the amount is preferably 2.0 or less times.

More specifically, the amounts of the polymerization initiator and the coupling modifier represented by the formula (A) to be added may be adjusted so that the mole number of the coupling modifier represented by the formula (A) can be preferably 0.1 or more times and 1.0 or less times of the mole number of the polymerization initiator.

In the formula (B), A is represented preferably by any one of the following formulas (I) to (IV).

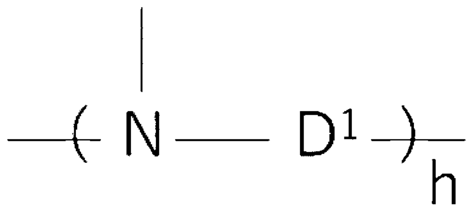

(I)

In the formula (I), $D^1$ represents a single bond, or a bivalent hydrocarbon group having from 1 to 20 carbon atoms, and h represents an integer of from 1 to 10. $D^1$, if present in a plural number, is respectively independent.

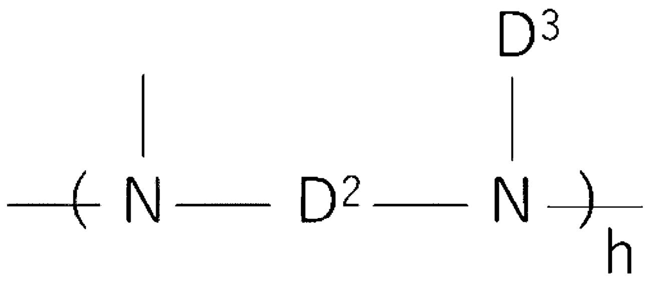

(II)

In the formula (II), $D^2$ represents a single bond, or a bivalent hydrocarbon group having from 1 to 20 carbon atoms. $D^3$ represents an alkyl group having from 1 to 20 carbon atoms. h represents an integer of from 1 to 10. Each of $D^2$ and $D^3$, if present in a plural number, is respectively independent.

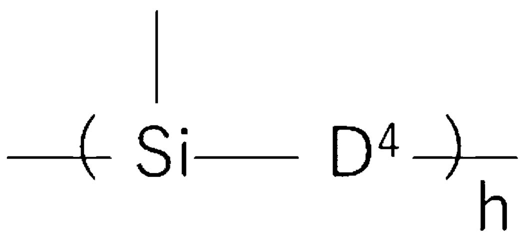

(III)

In the formula (III), $D^4$ represents a single bond, or a bivalent hydrocarbon group having from 1 to 20 carbon atoms. h represents an integer of from 1 to 10. $D^4$, if present in a plural number, is respectively independent.

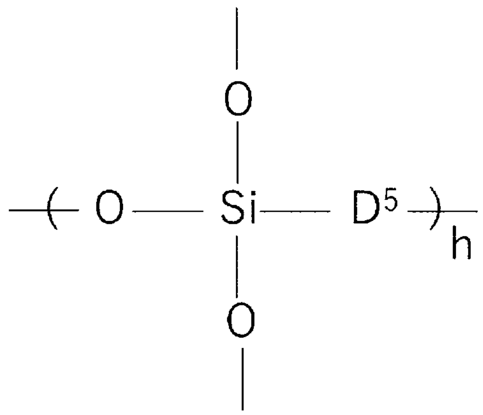

(IV)

In the formula (IV), $D^5$ represents a single bond, or a bivalent hydrocarbon group having from 1 to 20 carbon atoms. h represents an integer of from 1 to 10. $D^5$, if present in a plural number, is respectively independent.

In the formula (B), examples of the coupling modifier in which A is represented by the formula (I) include, but are not limited to, tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, and tris [3-(2,2-dimethoxy-1-aza-2-silacyclopentane)propyl]-(3-trimethoxysilylpropyl)1,3-propanediamine.

Other examples include tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, and tris(3-triethoxysilylpropyl)-[3-(2,2-diethoxy-1-aza-2-silacyclopentane)propyl]-1,3-propanediamine.

Still other examples include bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, and tetrakis(3-trimethoxysilylpropyl)-1,3-bisaminomethylcyclohexane.

Still other examples include tris(3-trimethoxysilylpropyl)-[3-(2,2-dimethoxy-1-aza-2-silacyclopentane) proypl]-1,3-bisaminomethycyclohexane, bis(3-trimethoxysilylpropyl)-bis[3-(2,2-dimethoxy-1-aza-2-silacyclopentane) propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-2-azacyclopentane)propyl]-1,3-bisaminomethylcyclohexane, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, and bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-bisaminomethylcyclohexane.

Still other examples include tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris [3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine, and pentakis(3-trimethoxysilylpropyl)-diethylenetriamine.

In the formula (B), examples of a coupling modifier in which A is represented by the formula (II) include, but are not limited to, tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis[3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane)propyl]-methyl-1,3-propanediamine, bis[3-(2,2-diethoxy-1-aza-2-silacyclopentane)propyl]-(3-triethoxysilylpropyl)-methyl-1,3-propanediamine, $N^1$,$N^{1'}$-(propane-1,3-diyl)bis($N^1$-methyl-$N^3$, $N^3$-bis(3-(trimethoxysilyl)propyl)-1,3-propanediamine), and $N^1$-(3-(bis(3-(trimethoxysilyl)propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

In the formula (B), examples of a coupling modifier in which A is represented by the formula (III) include, but are not limited to, tetrakis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis[3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis[3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

In the formula (B), examples of the coupling modifier in which A is represented by formula (IV) include, but are not limited to, 3-tris[2-(2,2-dimethoxy-1-aza-2-silacyclopentane)ethoxy]silyl-1-(2,2-dimethoxy-1-aza-2-silacyclopentane)propane, and 3-tris[2-(2,2-dimethoxy-1-aza-2-silacyclopentane)ethoxy]silyl-1-trimethoxysilylpropane.

The amount of the modifier represented by the formula (B) to be added is preferably determined based on a ratio between a mole number of the polymerization initiator to be added and a mole number of the modifier represented by the formula (B) to be added. Thus, the conjugated diene-based polymer and the modifier can be adjusted to react with each other in a desired stoichiometric ratio.

More specifically, the amounts of the polymerization initiator and the coupling modifier represented by the formula (B) to be added may be adjusted so that the mole number of the coupling modifier represented by the formula (B) can be preferably 0.012 or more times and 1.0 or less times, and more preferably 0.02 or more times and 0.5 or less times of the mole number of the polymerization initiator. In this case, the number of functional groups of the modifier in the formula (B) (for example, when i and j are 2 or more, each of w and x is present in a plural number, and plural fs and gs are respectively equal, $f \times i + (g + 1) \times j + k$) is preferably an integer of from 5 to 10, and more preferably an integer of from 6 to 10. From the viewpoint of setting the molecular weight of a modified conjugated diene-based polymer to be obtained to a preferable range, the mole number of the modifier is preferably 0.012 or more times. Besides, from the viewpoint of storage stability in a long-term storage, the mole number is preferably 0.2 or less times.

Among these, from the viewpoint of increasing the reactivity and interaction between the modified conjugated diene-based polymer and an inorganic filler such as silica, and from the viewpoint of increasing processability, i, j, and k in the formula (B) are preferably all 3.

Examples of the coupling modifier represented by the formula (C) include, but are not limited to, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, and tris(4-trimethoxysilylbutyl)amine.

A reaction temperature and a reaction time in the coupling step using the coupling modifier represented by the formula (C), although not limited to the following, for example, the reaction is performed preferably at 0°C or more and 120°C or less preferably for 30 seconds or more.

The amount of the coupling modifier represented by the formula (C) to be added corresponds to a total mole number of alkoxy groups bonded to silyl groups of the compound represented by the formula (C) of preferably 0.1 or more times and 2.0 or less times, more preferably 0.2 or more times and 1.0 or less times, and further preferably 0.3 or more times and 0.5 or less times of the mole number of the polymerization initiator to be added. From the viewpoint of the molecular weight of a modified conjugated diene-based polymer to be obtained, the mole number is preferably 0.1 or more times. From the viewpoint of the storage stability in long-term storage, the mole number is preferably 2.0 or less times.

Examples of the coupling modifier represented by the formula (D) include 3,3'-(1,1,3,3-tetramethoxydisiloxane-1,3-diyl) bis(N,N-dimethylpropan-1-amine), 3,3'-(1,1,3,3-tetraethoxydisiloxane-1,3-diyl) bis(N,N-dimethylpropan-1-amine), 3,3'-(1,1,3,3-tetrapropoxydisiloxane-1,3-diyl) bis(N,N-dimethylpropan-1-amine), 3,3'-(1,1,3,3-tetramethoxydisiloxane-1,3-diyl) bis(N,N-diethylpropan-1-amine), 3,3'-(1,1,3,3-tetramethoxydisiloxane-1,3-diyl) bis(N,N-dipropylpropan-1-amine), and 3,3'-(1,1,3,3-tetraethoxydisiloxane-1,3-diyl) bis(N,N-diethylpropan-1-amine).

The reaction temperature and the reaction time in the coupling step using the coupling modifier represented by the formula (D) are not especially limited, and the reaction is performed at preferably 0°C or more and 120°C or less, and for preferably 30 seconds or more.

The amount of the coupling modifier represented by the formula (D) to be added corresponds to a total mole number of alkoxy groups bonded to silyl groups of the compound represented by the formula (D) of preferably 0.25 or more times and 2.0 or less times, more preferably 0.3 or more times and 1 or less times, and further preferably 0.35 or more times and 0.5 or less times of the mole number of the polymerization initiator to be added. From the viewpoint of the molecular weight of a modified conjugated diene-based polymer to be obtained, and from the viewpoint of the storage stability in long-term storage, the mole number is preferably 2.0 or less times.

The method for producing a conjugated diene-based polymer of the present embodiment may include, after the coupling step, and/or before the coupling step, a condensation reaction step of causing a condensation reaction by adding a condensation accelerator.

In the method for producing a conjugated diene-based polymer of the present embodiment, after the coupling step, a deactivator, and/or a neutralizer or the like may be added if necessary to the resultant polymer solution.

Examples of the deactivator include, but are not limited to, water, and alcohols such as methanol, ethanol and isopropanol.

Examples of the neutralizer include, but are not limited to, carboxylic acids such as stearic acid, oleic acid, and versatic acid (a mixture of highly branched carboxylic acids having from 9 to 11 carbon atoms, and containing, as a principal component, one having 10 carbon atoms), an aqueous solution of an inorganic acid, and a carbon dioxide gas.

From the viewpoint of preventing gel formation after polymerization, and from the viewpoint of improving stability in processing, a rubber stabilizer is preferably added to the conjugated diene-based polymer of the present embodiment.

Although the rubber stabilizer is not limited to the following, any of known ones can be used, and preferred examples include antioxidants such as 2,6-di-tert-butyl-4-hydroxytoluene (BHT), n-octadecyl-3-(4'-hydroxy-3',5'-di-tert-butylphenol)propionate, and 2-methyl-4,6-bis[(octylthio)methyl]phenol.

(Step of Obtaining Polymer from Polymer Solution)

The method for producing a conjugated diene-based polymer of the present embodiment may include a step of obtaining the resultant conjugated diene-based polymer from the polymer solution. As a method for obtaining the conjugated diene-based polymer from the polymer solution, any of known methods can be employed, and for example, the following methods may be employed. Examples of the method include a method in which the conjugated diene-based polymer is filtered after separating a solvent by steam stripping or the like, and the resultant is dehydrated and dried to obtain the conjugated diene-based polymer, a method in which the solution is concentrated in a flushing tank, and the resultant is devolatilized by using a bent extruder or the like to obtain the conjugated diene-based polymer, and a method in which the solution is directly devolatilized by using a drum dryer or the like to obtain the conjugated diene-based polymer.

(Step of Obtaining Extended Conjugated Diene-based Polymer)

In the method for producing a conjugated diene-based polymer of the present embodiment, at least any one selected from the group consisting of an extender oil, a liquid rubber, and a resin may be added to the produced conjugated diene-based polymer to obtain an extended conjugated diene-based polymer.

It is noted that the extended conjugated diene-based polymer encompasses not only an oil extended conjugated diene-based polymer containing an oil but also a polymer containing a liquid polybutadiene or any of various resins except for an oil.

Thus, the processability of the conjugated diene-based polymer can be further improved.

As a method for adding an extender oil to the conjugated diene-based polymer, although not limited to the following, a method in which an extender oil is added to the conjugated diene-based polymer solution to be mixed, and the thus obtained extended polymer solution is desolvated is preferred.

Examples of the extender oil include an aroma oil, a naphthenic oil, a paraffin oil, and a vegetable oil. The vegetable oil can be prepared from an oil selected from the group consisting of linseed oil, safflower oil, soybean oil, corn oil, cottonseed oil, castor oil, tung oil, pine oil, sunflower oil, palm oil, olive oil, coconut oil, peanut oil, and grape seed oil. Among these, from the viewpoint of environmental safety, and from the viewpoint of oil bleed prevention and the wet grip performance, an aroma-alternative oil containing 3% by mass or less of a polycyclic aromatic (PCA) component according to the IP 346 is preferred.

Examples of the aroma-alternative oil include TDAE (Treated Distillate Aromatic Extracts), and MES (Mild Extraction Solvate) mentioned in Kautschuk Gummi Kunststoffe 52 (12) 799 (1999), and RAE (Residual Aromatic Extracts).

Examples of the liquid rubber include, but are not limited to, liquid polybutadiene and liquid styrene-butadiene rubber.

Examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenol-formaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrogenated wood oil resin, a hydrogenated oil resin, and an ester of a hydrogenated oil resin and a monofunctional or polyfunctional alcohol.

One of these resins may be singly used, or two or more of these may be used together.

When such a resin is hydrogenated, all unsaturated groups may be hydrogenated, or some may be left not hydrogenated.

The amount to be added of the at least one selected from the group consisting of an extender oil, a liquid rubber, and a resin is not especially limited, and is preferably from 1 to 60 parts by mass, more preferably from 10 to 60 parts by mass, and further preferably from 15 to 37.5 parts by mass with respect to 100 parts by mass of the conjugated diene-based polymer of the present embodiment.

[Rubber Composition]

The conjugated diene-based polymer of the present embodiment can be formed into a rubber composition (hereinafter sometimes referred to as the rubber composition of the present embodiment) by adding a filler thereto.

The rubber composition of the present embodiment contains a rubber component containing the conjugated diene-based polymer of the present embodiment, and 5.0 parts by mass or more and 150 parts by mass or less of a filler with respect to 100 parts by mass of the rubber component, and the rubber component preferably contains 10 parts by mass or more of the conjugated diene-based polymer of the present embodiment with respect to 100 parts by mass of the total amount of the rubber component. When the filler is dispersed in the rubber component containing the conjugated diene-based polymer of the present embodiment, a rubber composition further excellent in processability in vulcanization, and further excellent in a low hysteresis loss property, fracture performance, and abrasion resistance of a vulcanizate obtained therefrom can be obtained. When the rubber component contains the conjugated diene-based polymer of the present embodiment in a prescribed ratio, the low hysteresis loss property, the processability, and the abrasion resistance tend to be further improved.

Examples of the filler include, but are not limited to, a silica-based inorganic filler, carbon black, a metal oxide, and a metal hydroxide. Among these, a silica-based inorganic filler is preferred. In particular, when the rubber composition of the present embodiment is used in a tire, a vehicle component such as an anti-vibration rubber, or a vulcanized rubber for shoes or the like, a silica-based inorganic filler is preferably contained. One of these fillers may be singly used, or two or more of these may be used together.

The silica-based inorganic filler is not especially limited, any of known fillers can be used, a solid particle containing $SiO_2$ or $Si_3Al$ as a constituent unit is preferred, and a solid particle containing $SiO_2$ or $Si_3Al$ as a principal component of a constituent unit is more preferred. Here, the principal component refers to a component contained in the silica-based inorganic filler in an amount of over 50% by mass, preferably 70% by mass or more, and more preferably 80% by mass or more.

Examples of the silica-based inorganic filler include, but are not limited to, silica, clay, talc, mica, diatomite, wollastonite, montmorillonite, zeolite and inorganic fibrous substances such as glass fiber. Alternatively, a silica-based inorganic filler having a hydrophobized surface, and a mixture of a silica-based inorganic filler and an inorganic filler except for silica may be used. Among these, from the viewpoint of further improving strength and abrasion resistance of the rubber composition of the present embodiment, silica or glass fiber is preferred, and silica is more preferred. The silica is not especially limited, and examples include dry silica, wet silica and synthetic silicate silica. Among these silica, wet silica is preferred from the viewpoint of further improving fracture strength of the resultant rubber composition.

From the viewpoint of more definitely obtaining a rubber composition having practically good abrasion resistance and fracture strength, a nitrogen adsorption specific surface area, obtained by the BET adsorption method, of the silica-based inorganic filler is preferably 100 $m^2/g$ or more and 300 $m^2/g$ or less, and more preferably 170 $m^2/g$ or more and 250 $m^2/g$ or less. Besides, a silica-based inorganic filler having a comparatively small specific surface area (for example, a specific surface area of less than 200 $m^2/g$) and a silica-based inorganic filler having a comparatively large specific surface area (for example, 200 $m^2/g$ or more) may be used in combination if necessary. Particularly when a silica-based inorganic filler having a comparatively large specific surface area (for example, 200 $m^2/g$ or more) is used, the rubber composition of

the present embodiment is further improved in dispersibility of silica. As a result, the rubber composition tends to have further excellent abrasion resistance, fracture strength, and low hysteresis loss property.

Examples of the carbon black include, but are not limited to, carbon blacks of SRF, FEF, HAF, ISAF and SAF classes. Among these, a carbon black having a nitrogen adsorption specific surface area of 50 $m^2$/g or more and dibutyl phthalate (DBP) oil absorption of 80 mL/100 g or less is preferred.

The metal oxide is not especially limited as long as it is a solid particle containing a principal component of a constituent unit represented by chemical formula $M_xO_y$ (wherein M represents a metal atom, and x and y each independently represent an integer of from 1 to 6), and examples include alumina, titanium oxide, magnesium oxide, and zinc oxide.

Examples of the metal hydroxide include, but are not limited to, aluminum hydroxide, magnesium hydroxide, and zirconium hydroxide.

The content of the filler in the rubber composition of the present embodiment is preferably 5.0 parts by mass or more and 150 parts by mass or less, more preferably 20 parts by mass or more and 100 parts by mass or less, and further preferably 30 parts by mass or more and 90 parts by mass or less with respect to 100 parts by mass of the rubber component. When the content of the filler satisfies this range, the rubber composition tends to be further excellent in processability in vulcanization, and further excellent in the low hysteresis loss property, the fracture performance, and the abrasion resistance of a vulcanizate thereof.

From the viewpoint of definitely imparting performances required in use as a tire or the like such as dry grip performance and conductivity, the rubber composition of the present embodiment preferably contains 0.5 parts by mass or more and 100 parts by mass or less of carbon black with respect to 100 parts by mass of the rubber component containing the conjugated diene-based polymer of the present embodiment. From a similar viewpoint, the rubber composition contains carbon black in an amount of more preferably 3.0 parts by mass or more and 100 parts by mass or less, and further preferably 5.0 parts by mass or more and 50 parts by mass or less with respect to 100 parts by mass of the rubber component containing the conjugated diene-based polymer of the present embodiment.

The rubber composition of the present embodiment may further contain a silane coupling agent. When the rubber composition contains a silane coupling agent, interaction between the rubber component and the filler can be further improved.

Examples of the silane coupling agent are, but are not limited to, preferably a compound containing, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less with respect to 100 parts by mass of the filler. When the content of the silane coupling agent falls in the above-described range, there is a tendency that the interaction between the rubber component and the filler can be further improved.

The rubber composition of the present embodiment may contain, as the rubber component, a rubber-like polymer different from the conjugated diene-based polymer of the present embodiment (hereinafter simply referred to as the "rubber-like polymer").

Examples of the rubber-like polymer include, but are not limited to, a conjugated diene-based polymer and a hydrogenated product thereof, a random copolymer of a conjugated diene-based compound and a vinyl aromatic compound, and a hydrogenated product thereof, a block copolymer of a conjugated diene-based compound and a vinyl aromatic compound, and a hydrogenated product thereof, a non-diene-based polymer and a natural rubber.

Examples of the rubber-like polymer include, but are not limited to, a butadiene rubber and a hydrogenated product thereof, an isoprene rubber and a hydrogenated product thereof, styrene-based elastomers such as a styrene-butadiene rubber and a hydrogenated product thereof, a styrene-butadiene block copolymer and a hydrogenated product thereof, and a styrene-isoprene block copolymer and a hydrogenated product thereof, and an acrylonitrile-butadiene rubber and a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an $\alpha,\beta$-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The rubber-like polymer may be in the form of a modified rubber imparted with a functional group having polarity such as a hydroxyl group or an amino group. When the rubber composition of the present invention is used in a tire, the rubber-like polymer is preferably one or more selected from the group consisting of a butadiene rubber, an isoprene rubber,

a styrene-butadiene rubber, a natural rubber and a butyl rubber.

The weight average molecular weight of the rubber-like polymer is preferably 2,000 or more and 2,000,000 or less, and more preferably 5,000 or more and 1,500,000 or less from the viewpoints of abrasion resistance, fracture strength, and balance between a low hysteresis loss property and processability of the resultant rubber composition. As the rubber-like polymer, a low molecular weight rubber-like polymer, that is, what is called a liquid rubber, can be used. One of these rubber-like polymers may be singly used, or two or more of these may be used together.

When the rubber composition of the present embodiment contains the rubber-like polymer in addition to the conjugated diene-based polymer of the present embodiment, a content ratio (in a mass ratio) of the conjugated diene-based polymer to the rubber-like polymer is, in terms of (the conjugated diene-based polymer/the rubber-like polymer), preferably 10/90 or more and 100/0 or less, more preferably 20/80 or more and 99/1 or less, and further preferably 30/70 or more and 95/5 or less. In other words, the rubber component contains, with respect to 100 parts by mass of the total amount of the rubber component, preferably 10 parts by mass or more and 100 parts by mass or less, more preferably 20 parts by mass or more and 90 parts by mass or less, and further preferably 30 parts by mass or more and 80 parts by mass or less of the conjugated diene-based polymer of the present embodiment. When the ratio of the conjugated diene-based polymer of the present embodiment contained in the rubber component falls in the above-described range, a vulcanizate of the rubber composition tends to be further excellent in abrasion resistance and a low hysteresis loss property.

To the rubber composition of the present embodiment, a rubber softener may be added in addition to the rubber component from the viewpoint of further improving the processability.

As the rubber softener, the same ones as those described as examples to be contained in the above-described conjugated diene-based polymer can be used, and a mineral oil, or a liquid or low molecular weight synthetic softener is suitable.

A mineral oil-based rubber softener, which is used for softening, expanding and improving processability of a rubber component and is designated as a process oil or an extender oil, is a mixture of an aromatic ring, a naphthene ring and a paraffin chain. In particular, one in which the number of carbon atoms of the paraffin chain is 50% or more is designated as a paraffin-based softener, one in which the number of carbon atoms of the naphthene ring is 30% or more and 45% or less is designated as a naphthene-based softener, and one in which the number of carbon atoms belonging to aromatic carbons exceeds 30% of the number of all carbon atoms is designated as an aromatic-based softener. The rubber composition of the present embodiment preferably contains, as a rubber softener, one having an appropriate aromatic content. When such a rubber softener is contained, compatibility with the conjugated diene-based polymer is further improved.

The content of the rubber softener in the rubber composition of the present embodiment is expressed as a sum of the amount of the rubber softener precedently added to the conjugated diene-based polymer or the rubber-like polymer, and the amount of the rubber softener added in forming the rubber composition.

In the rubber composition of the present embodiment, the content of the rubber softener is preferably 0 part by mass or more and 100 parts by mass or less, more preferably 10 parts by mass or more and 90 parts by mass or less, and further preferably 30 parts by mass or more and 90 parts by mass or less with respect to 100 parts by mass of the rubber component. When the content of the rubber softener is 100 parts by mass or less with respect to 100 parts by mass of rubber component, bleeding out can be suppressed, and the stickiness of the surface of the rubber composition can be further suppressed.

The rubber composition can be produced by mixing the conjugated diene-based polymer, the rubber-like polymer, the filler, the silane coupling agent, the rubber softener and the like. The mixing method is not especially limited, and examples include a melt-kneading method using a general mixer such as an open roll, a Banbury mixer, a kneader, a single shaft screw extruder, a twin shaft screw extruder or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, the rubber component, the filler, the silane coupling agent, and the additive may be kneaded all together, or may be mixed dividedly in plural times.

The rubber composition of the present embodiment may be in the form of a vulcanizate obtained by vulcanization with a vulcanizing agent. The vulcanizing agent is not especially limited, and examples include radical generators such as organic peroxides and azo compounds, oxime compounds, nitroso compounds, polyamine compounds, sulfur and sulfur compounds. The sulfur compounds encompass sulfur monochloride, sulfur dichloride, disulfide compounds, high molecular weight polysulfide compounds and the like.

In the rubber composition of the present embodiment, the content of the vulcanizing agent is preferably 0.01 parts by mass or more and 20 parts by mass or less, and more preferably 0.1 parts by mass or more and 15 parts by mass or less with respect to 100 parts by mass of the rubber component. As a vulcanization method, any of conventionally known methods can be employed. A vulcanization temperature is preferably 120°C or more and 200°C or less, and more preferably 140°C or more and 180°C or less.

For the vulcanization of the rubber composition, a vulcanization accelerator and/or a vulcanization aid may be

used if necessary. As the vulcanization accelerator, any of conventionally known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators.

Besides, examples of the vulcanization aid include, but are not limited to, zinc oxide and stearic acid.

The contents of the vulcanization accelerator and the vulcanization aid are respectively preferably 0.01 parts by mass or more and 20 parts by mass or less, and more preferably 0.1 parts by mass or more and 15 parts by mass or less with respect to 100 parts by mass of the rubber component.

In the rubber composition of the present embodiment, as long as the effects of the present embodiment are not impaired, various additives such as another softener and filler excluding those described above, a heat resistance stabilizer, an antistatic agent, a weathering stabilizer, an anti-aging agent, a colorant and a lubricant may be used. As the softener, any of known softeners can be used.

Examples of the filler excluding those described above include, but are not limited to, calcium carbonate, magnesium carbonate, aluminum sulfate, and barium sulfate. As the heat resistance stabilizer, the antistatic agent, the weathering stabilizer, the anti-aging agent, the colorant and the lubricant, any of known materials can be respectively used.

The rubber composition of the present embodiment is suitably used as a rubber composition for a tire. The rubber composition of the present embodiment can be suitably used in, but not especially limited to, various tires such as a fuel-efficient tire, an all-season tire, a high-performance tire and a studless tire; and various tire portions such as a tread, a carcass, a sidewall and a bead.

It is noted that each numerical range described above as a preferable range or the like may be a numerical range obtained by arbitrarily combining any one of values described as the upper limits and any one of values described as the lower limits even when not particularly stated.

## Examples

The present embodiment will now be described in more detail with reference to specific examples and comparative examples, and it is noted that the present invention is not limited to the following examples and comparative examples at all.

Various physical properties of the examples and comparative examples were measured by the following methods.

### [(Physical Property 1) Amount of Bound Aromatic Vinyl Monomer Unit (Amount of Bound Styrene)]

(Amount of Bound Styrene $X_{all}$ in Conjugated Diene-based Polymer)

A conjugated diene-based polymer not containing a rubber softener was used as a sample, and 100 mg of the sample was diluted to 100 mL with chloroform and dissolved to obtain a measurement sample.

The amount of bound styrene (% by mass) in 100% by mass of the conjugated diene-based polymer used as the sample was measured by measuring the amount of absorption at an ultraviolet absorption wavelength (in the vicinity of 254 nm) by a phenyl group of styrene (measurement apparatus: Spectrophotometer "UV-2450" manufactured by Shimadzu Corporation).

(Amount of Bound Styrene $X_1$ in First Polymer Segment)

The amount of bound styrene in the first polymer segment was calculated in the same manner as that employed for the amount of bound styrene in a segment of the conjugated diene-based polymer except that the sample was changed from the conjugated diene-based polymer to the first polymer segment.

(Amount of Bound Styrene $X_2$ in Second Polymer Segment)

A segment ratio ($r_1$) of the first polymer segment, and a segment ratio ($r_2$) of the second polymer segment were calculated by a method described below, and an amount of bound styrene $X_{all}$ in the conjugated diene-based polymer and the amount of bound styrene $X_1$ in the first polymer segment calculated based on the measurement were used to calculate the amount of bound styrene ($X_2$) in the second polymer segment in accordance with the following expression (9):

$$X_2 = \frac{100X_{all} - r_1X_1}{r_2} \quad (9)$$

[(Physical Property 2) Amount of Vinyl Bond in Bound Conjugated Diene (Amount of 1,2-vinyl Bond in Bound Butadiene)]

(Amount of Vinyl Bond $Y_{all}$ in Conjugated Diene-based Polymer)

A conjugated diene polymer not containing a rubber softener was used as a sample, and 50 mg of the sample was dissolved in 10 mL of carbon disulfide to obtain a measurement sample.

An infrared spectrum of each sample was measured in a range of 600 to 1,000 $cm^{-1}$ with Fourier transform infrared spectrophotometer (trade name "FT-IR230" manufactured by JASCO Corporation).

In accordance with the Hampton method (method described by R. R. Hampton, Analytical Chemistry 21, 923 (1949)), an amount of 1,2-vinyl bond (mol%) in bound butadiene was obtained based on absorbance at a prescribed wavelength.

(Amount of Vinyl Bond $Y_1$ in First Polymer Segment)

The amount of vinyl bond in the first polymer segment was calculated in the same manner as that employed for the amount of bound vinyl in a conjugated diene polymer except that the sample was changed from the conjugated diene polymer to the first polymer segment.

In Tables, when the numerical range of Expression (2) was satisfied, "○" was shown, and when not, "×" was shown.

(Amount of Vinyl Bond $Y_2$ in Second Polymer Segment)

A segment ratio ($r_1$) of the first polymer segment, and a segment ratio ($r_2$) of the second polymer segment were calculated by a method described below, and the amount of bound styrene $X_{all}$ in the conjugated diene-based polymer, the amount of bound styrene $X_1$ in the first polymer segment, the amount of bound styrene $X_2$ in the second polymer segment, the amount of vinyl bond $Y_{all}$ in the conjugated diene-based polymer, and the amount of vinyl bond $Y_1$ in the first polymer segment all calculated based on the measurement were used to calculate the amount of vinyl bond $Y_2$ in the second polymer segment in accordance with the following expression (10):

$$Y_2 = \frac{(100 - X_{all}) \times Y_{all} \times 100 - (100 - X_1) \times Y_1 \times r_1}{(100 - X_2) \times r_2} \quad \cdots (10)$$

[(Physical Property 3) Polymer Segment Ratio]

(First Polymer Segment Ratio $r_1$)

A first polymer segment ratio was calculated by using the following expression (11).

A ratio of a polymer segment in the first polymerization step (P1) of producing a first polymer segment was calculated based on a solid content of the conjugated diene-based polymer per time after the first polymerization step (P1) with respect to a total amount of the conjugated diene compound and the aromatic vinyl compound added per time for polymerizing the conjugated diene-based polymer.

The solid content in the conjugated diene-based polymer solution was obtained based on the amount of a non-volatile component in the polymer solution flowing through a discharge port of the first polymerization step (P1) in a unit time.

The whole amount of the polymer solution flowing through the discharge port of the first polymerization step (P1) was collected for 3 minutes, and immediately after that, a polymerization terminator was added. Thereafter, the collected solution was transferred to a heat resistant dish or the like, and a mass M1 of a solid remaining after drying the resultant in an oven at 140°C for 30 minutes or more was measured.

Here, a solid content m1 and the first polymer segment ratio ($r_1$) were obtained in accordance with the following

expression (11).

$$\text{First polymer segment ratio r1 (\%)} = \frac{\text{solid content m1[g/min]}}{\text{total amount of added conjugated diene compound [g/min] + total amount of added aromatic vinyl compound [g/min]}}$$

$$= \frac{\text{mass M1 of solid [g/3min]} \div 3}{\text{conjugated diene compound added to first reactor [g/min] + aromatic vinyl compound added to first reactor [g/min] + conjugated diene compound added to second reactor [g/min] + aromatic vinyl compound added to second reactor [g/min]}} \cdots (11)$$

(Second Polymer Segment Ratio $r_2$)

A second polymer segment ratio ($r_2$) was calculated by using the following expression (12).

The second polymer segment ratio in the second polymerization step (P2) of forming the second polymer segment was calculated based on a difference between a solid content of the conjugated diene-based polymer per time after the second polymerization step (P2) and the solid content of the conjugated diene-based polymer per time after the first polymerization step (P1) with respect to the total amount of the conjugated diene compound and the aromatic vinyl compound added per time for polymerizing the conjugated diene-based polymer.

The solid content in the conjugated diene-based polymer solution was obtained based on the amount of a non-volatile component in the polymer solution flowing through a discharge port of the second polymerization step (P2) in a unit time.

The whole amount of the polymer solution flowing through the discharge port of the second polymerization step (P2) was collected for 3 minutes, and immediately after that, a polymerization terminator was added. Thereafter, the collected solution was transferred to a heat resistant dish or the like, and a mass M2 of a solid remaining after drying the resultant in an oven at 140°C for 30 minutes or more was measured. Based on the mass M1 of the solid obtained in the first polymerization step (P1) described above and the mass M2 of the solid, the second polymer segment ratio $r_2$ was obtained in accordance with the following expression (12).

$$\text{Second polymer segment ratio r2 (\%)} = \frac{\text{solid content m2 [g/min] - solid content m1 [g/min]}}{\text{total amount of added conjugated diene compound [g/min] + total amount of added aromatic vinyl compound [g/min]}}$$

$$= \frac{\text{mass M2 of solid (g/3 min)} \div 3 - \text{mass M1 of solid (g/3 min)} \div 3}{\text{conjugated diene compound added to first reactor (g/min) + aromatic vinyl compound added to first reactor (g/min) + conjugated diene compound added to second reactor (g/min) + aromatic vinyl compound added to second reactor (g/min)}} \cdots (12)$$

[(Physical Property 4) Estimated Glass Transition Temperature]

The estimated glass transition temperature of a conjugated diene-based polymer was obtained by using the expression (iii).

[(Physical Property 5) Molecular Weight]

A conjugated diene-based polymer was used as a sample for measuring a chromatogram by using a GPC measurement apparatus (trade name "HLC-8320GPC" manufactured by Tosoh Corporation) including a series of three columns using a polystyrene-based gel as a filler, and an RI detector (trade name "HLC8020" manufactured by Tosoh Corporation). On the basis of a calibration curve obtained using standard polystyrene, a weight average molecular weight (Mw), a number average molecular weight (Mn), and a molecular weight distribution (Mw/Mn) were obtained.

As an eluent, 5 mmol/L triethylamine-containing THF (tetrahydrofuran) was used.

As the columns, trade name "TSKguardcolumn Super MP(HZ)-H" manufactured by Tosoh Corporation connected, as a guard column at a previous stage, to a series of three columns of trade name "TSKgel Super Multipore HZ-H"

manufactured by Tosoh Corporation were used.

Ten (10) mg of a sample for the measurement was dissolved in 10 mL of THF to obtain a measurement solution, and 10 μL of the measurement solution was injected into the GPC measurement apparatus for performing the measurement under conditions of an oven temperature of 40°C and a THF flow rate of 0.35 mL/min.

[(Physical Property 6) Polymer Mooney Viscosity]

A conjugated diene-based polymer was used as a sample to measure a Mooney viscosity by using a Mooney viscometer (trade name "VR1132" manufactured by Ueshima Seisakusho Co., Ltd.) in accordance with ISO 289 with an L-type rotor used, and with a measurement temperature set to 100°C.

After the sample was preheated at the test temperature for 1 minute, the rotor was rotated at 2 rpm, and a torque was measured 4 minutes after to measure a Mooney viscosity ($ML_{(1+4)}$).

[(Physical Property 7) Glass Transition Temperature (Tg)]

When a conjugated diene-based polymer was an oil extended product, the conjugated diene-based polymer after extracting the extender oil was used as a sample, and in accordance with ISO 22768: 2006, a heating DSC curve was recorded with a differential scanning calorimeter "DSC 3200S" manufactured by Mac Science with the temperature decreased from 20°C at 20°C/min to -120°C, and increased from -120°C at 10°C/min under a flow of 50 mL/min of helium. Then, only one inflection point observed on the heating DSC curve between -100°C and -20°C was determined as the glass transition temperature.

An extrapolated onset temperature was determined as a temperature on an intersection point between a straight line drawn by extending, toward the high temperature side, the baseline on the low temperature side and a tangent line drawn at a point corresponding to the maximum gradient of a curve of a stepwise change portion of glass transition.

An extrapolated end temperature was determined as a temperature on an intersection point between a straight line drawn by extending, toward the low temperature side, the baseline on the high temperature side and the tangent line drawn at the point corresponding to the maximum gradient of the curve of the stepwise change portion of glass transition.

[(Physical Property 8) Modification Ratio]

A modification ratio of a conjugated diene-based polymer of each of Examples and Comparative Examples was measured by column adsorption GPC as follows.

A conjugated diene-based polymer was used as a sample for performing measurement by utilizing a characteristic that a modified basic polymer component adsorbs onto a GPC column using a silica-based gel as a filler.

Based on a difference between a chromatogram obtained by the measurement with a polystyrene-based column and a chromatogram obtained by the measurement with a silica-based column, which were obtained from a sample solution containing the sample and low molecular weight internal standard polystyrene, the amount of absorption onto the silica-based column was measured to obtain a modification ratio.

<Preparation of Sample Solution>:

10 mg of the sample and 5 mg of standard polystyrene were dissolved in 20 mL of THF( tetrahydrofuran) to obtain the sample solution.

<GPC Measurement Conditions Using Polystyrene-based Column>:

With an apparatus of trade name "HLC-8320GPC" manufactured by Tosoh Corporation used, and with 5 mmol/L triethylamine-containing THF used as an eluent, 10 μL of the sample solution was injected into the apparatus to obtain a chromatogram with an RI detector under conditions of a column oven temperature of 40°C, and a THF flow rate of 0.35 mL/min.

As the columns, a series of three columns of trade name "TSKgel Super Multipore HZ-H" manufactured by Tosoh Corporation were connected with a column of trade name "TSKguardcolumn SuperMP(HZ)-H" manufactured by Tosoh Corporation connected as a guard column at a previous stage to be used.

<GPC measurement conditions using silica-based column>

The GPC measurement was performed using an apparatus of trade name "HLC-8320GPC" manufactured by Tosoh Corporation and an RI detector (trade name "HLC8020" manufactured by Tosoh Corporation).

THF was used as an eluent, and 50 μL of a sample solution was injected into the GPC apparatus to obtain a chromatogram under conditions of a column oven temperature of 40°C and a THF flow rate of 0.5 mL/min.

A series of columns of trade names "Zorbax PSM-1000S", "PSM-300S" and "PSM-60S" manufactured by Agilent Technologies Japan Ltd., and a guard column of trade name "DIOL 4.6 x 12.5 mm 5 micron" connected at a previous stage were used.

<Calculation Method for Modification Ratio>:

In the chromatogram obtained by using the polystyrene-based column, it was assumed that the whole peak area was 100, that a peak area of the sample was p1, that a peak area of the standard polystyrene was p2, and in the chromatogram obtained by using the silica-based column, it was assumed that the whole peak area was 100, that a peak area of the sample was p3, and that a peak area of the standard polystyrene was p4, and thus, a modification ratio (%) was obtained based on the following expression:

$$\text{Modification ratio (\%)} = [1 - (p2 \times p3)/(p1 \times p4)] \times 100$$

wherein p1 + p2 = p3 + p4 = 100.

[Production of Conjugated Diene-based Polymer]

(Example 1)

Two tank pressure vessels, each of which was a tank reactor equipped with a stirrer having an internal volume of 10 L and a ratio (L/D) of the internal height (L) and the diameter (D) of 4.0, having an inlet at a bottom and an outlet at a top, and was equipped with a stirrer and a temperature controlling jacket, were connected to each other as a polymerization reactor.

1,3-Butadiene, and normal hexane, from which a water content had been precedently removed, were mixed under conditions of 18.8 g/min and 163.4 g/min, respectively to obtain a mixed solution. N-butyllithium for residual impurity inactivation was further added at 0.104 mmol/min in a static mixer provided in the middle of a pipe for supplying this mixed solution to the inlet of the reactor, and the resultant was mixed and then continuously supplied to the bottom of the reactor. Besides, 2,2-bis(2-oxolanyl)propane used as a polar material and n-butyllithium used as a polymerization initiator were supplied respectively at rates of 0.027 mmol/min and 0.239 mmol/min to the bottom of the first reactor in which these substances were vigorously stirred with the stirrer, and the internal temperature of the reactor was kept at 78°C. Thereafter, when the polymerization reaction was stabilized, a small amount of a conjugated diene-based polymer was taken out from the top of the reactor, and an antioxidant (BHT) was added thereto to obtain an amount of 0.2 g per 100 g of the polymer. Then, the solvent was removed, and the amount of vinyl bond ($Y_1$) in bound conjugated diene of a first polymer segment was measured.

Next, the polymer solution was continuously supplied from the top of the first reactor to the bottom of the second reactor, and to the second reactor, 1,3-butadiene, styrene, normal hexane, and 2,2-bis(2-oxolanyl)propane used as the polar material were stirred respectively at rates of 10.6 g/min, 4.5 g/min, 41.9 g/min, and 0.415 mmol/min, and the reaction was continued at 78°C.

Next, to the polymer solution flowing out from the top of the second reactor, 1-methyl-4-[3-(trimethoxysilyl)propyl] piperazine (shown as "Coupling Agent A" in Tables), and tetrakis(3-trimethoxysilylpropyl)-1,3-propanediamine (shown as "Coupling Agent B" in Tables) were continuously added as the coupling agent respectively at rates of 0.097 mmol/min and 0.010 mmol/min, and the resultant was mixed with the static mixer for causing a coupling reaction. Here, a time until the addition of the coupling agent to the polymer solution flowing out of the outlet of the reactor was 4.8 min, the temperature was 68°C, and a difference between the temperature in the polymerization step and the temperature before adding the coupling agent was 2°C.

A small amount of the conjugated diene-based polymer solution after the coupling reaction was taken out, an antioxidant (BHT) was added thereto to obtain an amount of 0.2 g per 100 g of the polymer, and then, the solvent was removed, and the amount of bound styrene (X), the amount of vinyl bond (Y), the glass transition temperature, the extrapolated onset and end temperatures were identified.

Next, to the polymer solution after the coupling reaction, an antioxidant (BHT) was continuously added at 0.055 g/min (in the form of an n-hexane solution) to obtain an amount of 0.2 g per 100 g of the polymer, and thus, the coupling reaction was completed. Simultaneously with the antioxidant, an SRAE oil (JOMO Process NC 140, manufactured by JX Nippon Oil & Energy Corporation) was continuously added as the rubber softener to obtain an amount of 5.0 g per 100 g of the polymer, and the resultant was mixed with the static mixer.

The solvent was removed by steam stripping, and thus, a conjugated diene-based polymer (A1) was obtained. The molecular weight, the Mooney viscosity, and the modification ratio thereof were identified.

(Example 2)

To the first reactor, 1,3-butadiene and normal hexane were added under conditions of 15.8 g/min and 156.0 g/min, respectively, and 2,2-bis(2-oxolanyl)propane was added as the polar material at a rate of 0.072 mmol/min, and to the second reactor, 1,3-butadiene, styrene, normal hexane, and 2,2-bis(2-oxolanyl)propane used as the polar material were added respectively at rates of 14.0 g/min, 4.4 g/min, 49.9 g/min, and 0.370 mmol/min. Except for these conditions, the same conditions as those employed in Example 1 were employed to obtain a conjugated diene-based polymer (A2).

(Example 3)

To the first reactor, 1,3-butadiene and normal hexane were added under conditions of 19.8 g/min and 165.6 g/min, respectively, and 2,2-bis(2-oxolanyl)propane was added as the polar material at a rate of 0.145 mmol/min, and to the second reactor, 1,3-butadiene, styrene, normal hexane, and 2,2-bis(2-oxolanyl)propane used as the polar material were added respectively at rates of 7.2 g/min, 4.2 g/min, 33.2 g/min, and 0.253 mmol/min, and the internal temperature of the second reactor was set to 78°C. Except for these conditions, the same conditions as those employed in Example 1 were employed to obtain a conjugated diene-based polymer (A3).

(Example 4)

To the first reactor, 1,3-butadiene and normal hexane were added under conditions of 18.8 g/min and 163.4 g/min, respectively, and 2,2-bis(2-oxolanyl)propane was added as the polar material at a rate of 0.023 mmol/min, and the internal temperature of the first reactor was set to 82°C. To the second reactor, 1,3-butadiene, styrene, normal hexane, and 2,2-bis(2-oxolanyl)propane used as the polar material were added respectively at rates of 11.2 g/min, 5.3 g/min, 44.8 g/min, and 0.153 mmol/min. Except for these conditions, the same conditions as those employed in Example 1 were employed to obtain a conjugated diene-based polymer (A4).

(Example 5)

1-Methyl-4-[3-(trimethoxysilyl)propyl]piperazine (shown as "Coupling Agent A" in Tables), and tetrakis(3-trimethoxysilylpropyl)-1,3-propanediamine (shown as "Coupling Agent B" in Tables) were continuously added as the coupling agent respectively at rates of 0.110 mmol/min and 0.007 mmol/min. Except for these conditions, the same conditions as those employed in Example 1 were employed to obtain a conjugated diene-based polymer (A5).

(Example 6)

To the first reactor, n-butyllithium was added as the polymerization initiator at 0.193 mmol/min, 2,2-bis(2-oxolanyl)propane was added as the polar material at 0.019 mmol/min, and to the second reactor, 2,2-bis(2-oxolanyl) propane was added at 0.298 mmol/min, and no coupling agent was added. Except for these conditions, the same conditions as those employed in Example 1 were employed to obtain a conjugated diene-based polymer (A6).

(Example 7)

To the first reactor, n-butyllithium was added as the polymerization initiator at 0.343 mmol/min, 2,2-bis(2-oxolanyl)propane was added as the polar material at 0.033 mmol/min, and to the second reactor, 2,2-bis(2-oxolanyl) propane was added at 0.596 mmol/min, and 1-methyl-4-[3-(trimethoxysilyl)propyl]piperazine (shown as "Coupling Agent A" in tables) was continuously added as the coupling agent at a rate of 0.173 mmol/min. Except for these conditions, the same conditions as those employed in Example 1 were employed to obtain a conjugated diene-based polymer (A7).

(Example 8)

To the first reactor, n-butyllithium was added as the polymerization initiator at 0.198 mmol/min, 2,2-bis(2-oxolanyl)propane was added as the polar material at 0.019 mmol/min, and to the second reactor, 2,2-bis(2-oxolanyl) propane was added at 0.298 mmol/min, and 2,2-dimethoxy-1-(3-trimethoxysilylpropyl)-1-aza-2-silacyclopentane (shown as "Coupling Agent C" in Tables) was continuously added as the coupling agent at a rate of 0.052 mmol/min. Except for these conditions, the same conditions as those employed in Example 1 were employed to obtain a conjugated diene-based polymer (A8).

(Example 9)

To the first reactor, n-butyllithium was added as the polymerization initiator at 0.130 mmol/min, 2,2-bis(2-oxolanyl)propane was added as the polar material at 0.015 mmol/min, and to the second reactor, 2,2-bis(2-oxolanyl) propane was added at 0.235 mmol/min, tetrakis(3-trimethoxysilylpropyl)-1,3-propanediamine (shown as "Coupling Agent B" in Tables) was continuously added as the coupling agent at a rate of 0.017 mmol/min, and an SRAE oil (JOMO Process NC 140, manufactured by JX Nippon Oil & Energy Corporation) was continuously added as the rubber softener to obtain an amount of 25.0 g per 100 g of the polymer. Except for these conditions, the same conditions as those employed in Example 1 were employed to obtain a conjugated diene-based polymer (A9).

(Example 10)

1,3-butadiene and styrene were addedto the second reactor and normal hexane was added to the second reactor respectively at rates of 13.8 g/min, 2.7 g/min, and 46.6 g/min continuously. Except for these conditions, the same conditions as those employed in Example 4 were employed to obtain a conjugated diene-based polymer (A10).

(Example 11)

2,2-Bis-(2-oxolanyl)propane was added as the polar material to the first reactor and 2,2-bis(2-oxolanyl)propane was added to the second reactor respectively at rates of 0.266 mmol/min and 0.176 mmol/min continuously. Except for these conditions, the same conditions as those employed in Example 1 were employed to obtain a conjugated diene-based polymer (A11).

(Example 12)

To the first reactor, 1,3-butadiene and styrene were simultaneously added respectively at rates of 13.8 g/min and 4.4 g/min, normal hexane was added under a condition of 104.8 g/min, 2,2-bis(2-oxolanyl)propane was added as the polar material at a rate of 0.003 mmol/min, and the internal temperature of the first reactor was set to 65°C. Besides, to the second reactor, 1,3-butadiene was added at a rate of 2.9 g/min, no additional styrene was added, normal hexane and 2,2-bis(2-oxolanyl)propane as the additional polar material were added respectively at rates of 9.5 g/min and 0.020 mmol/min, the internal temperature of the second reactor was set to 65°C, and 1-methyl-4-[3-(trimethoxysilyl)propyl]piperazine (shown as "Coupling Agent A" in Tables), and tetrakis(3-trimethoxysilylpropyl)-1,3-propanediamine (shown as "Coupling Agent B" in Tables) were continuously added as the coupling agent respectively at rates of 0.087 mmol/min and 0.009 mmol/min. Except for these conditions, the same conditions as those employed in Example 1 were employed to obtain a conjugated diene-based polymer (A12).

(Example 13)

To the first reactor, n-butyllithium was added as the polymerization initiator, and 2,2-bis(2-oxolanyl)propane was added as the polar material respectively at 0.370 mmol/min and 0.036 mmol/min, and 2,2-bis(2-oxolanyl)propane was added to the second reactor at 0.641 mmol/min. Except for these conditions, the same conditions as those employed in Example 7 were employed to obtain a conjugated diene-based polymer (A13).

(Example 14)

To the first reactor, n-butyllithium was added as the polymerization initiator, and 2,2-bis(2-oxolanyl)propane was added as the polar material respectively at 0.062 mmol/min and 0.007 mmol/min, and to the second reactor, 2,2-bis(2-oxolanyl)propane was added at 0.094 mmol/min, tetrakis(3-trimethoxysilylpropyl)-1,3-propanediamine (shown as "Coupling Agent B" in Tables) was continuously added as the coupling agent at a rate of 0.008 mmol/min, and an SRAE oil (JOMO Process NC 140, manufactured by JX Nippon Oil & Energy Corporation) was continuously added as the rubber softener to obtain an amount of 37.5 g per 100 g of the polymer. Except for these conditions, the same conditions as those employed in Example 9 were employed to obtain a conjugated diene-based polymer (A14).

(Example 15)

To the first reactor, 1,3-butadiene and normal hexane were added under conditions of 21.4 g/min and 170.3

g/min, respectively, and 2,2-bis(2-oxolanyl)propane was added as the polar material at 0.054 mmol/min, and to the second reactor, 1,3-butadiene, styrene, normal hexane, and 2,2-bis(2-oxolanyl)propane were continuously added respectively at 9.2 g/min, 3.5 g/min, 36.8 g/min, and 0.394 mmol/min. Except for these conditions, the same conditions as those employed in Example 1 were employed to obtain a conjugated diene-based polymer (A15).

(Example 16)

To the first reactor, 1,3-butadiene and normal hexane were added under conditions of 15.4 g/min and 166.0 g/min, respectively, and 2,2-bis(2-oxolanyl)propane was added as the polar material at 0.072 mmol/min, and to the second reactor, 1,3-butadiene, styrene, normal hexane, and 2,2-bis(2-oxolanyl)propane were continuously added respectively at 12.6 g/min, 5.3 g/min, 48.2 g/min, and 0.340 mmol/min at a polymerization temperature in the second reactor of 80°C. Except for these conditions, the same conditions as those employed in Example 1 were employed to obtain a conjugated diene-based polymer (A 16).

(Reference Example 1)

To the first reactor, 1,3-butadiene and styrene were simultaneously added at 22.3 g/min and 4.2 g/min, respectively, normal hexane was added under condition of 178.8 g/min, 2,2-bis(2-oxolanyl)propane was added as the polar material at a rate of 0.101 mmol/min, and the internal temperature of the first reactor was set to 68°C, and to the second reactor, 1,3-butadiene was added at 7.4 g/min, no additional styrene was added, normal hexane was added at 26.7 g/min, no additional polar material was added, and the internal temperature of the second reactor was set to 73°C. Except for these conditions, the same conditions as those employed in Example 1 were employed to obtain a conjugated diene-based polymer (B1).

(Comparative Example 1)

A conjugated diene-based polymer (B2) was obtained in the same manner as in Example 1 except that 2,2-bis(2-oxolanyl)propane was added as the polar material to the first reactor at a rate of 0.266 mmol/min, and that 1,3-butadiene, additional styrene, normal hexane, and 2,2-bis(2-oxolanyl)propane as the additional polar material were added to the second reactor respectively at rates of 9.7 g/min, 5.4 g/min, 41.3 g/min, and 0.156 mmol/min.

(Comparative Example 2)

The step of adding the coupling agent was not performed. Except for this, the same conditions as those employed in Reference Example 1 were employed to obtain a conjugated diene-based polymer (B3).

(Comparative Example 3)

A conjugated diene-based polymer (B4) was obtained in the same manner as in Reference Example 1 except that n-butyllithium was added as the polymerization initiator to the first reactor at 0.343 mmol/min, that 2,2-bis(2-oxolanyl) propane was added as the polar material at 0.124 mmol/min, that normal hexane was added as the coupling agent at 109.2 g/min, and that 1-methyl-4-[3-(trimethoxysilyl)propyl]piperazine (shown as "Coupling Agent A" in Tables) was continuously added at a rate of 0.173 mmol/min.

(Comparative Example 4)

A conjugated diene-based polymer (B5) was obtained in the same manner as in Reference Example 1 except that n-butyllithium was added as the polymerization initiator to the first reactor at 0.198 mmol/min, that 2,2-bis(2-oxolanyl) propane was added as the polar material at 0.070 mmol/min, that 2,2-dimethoxy-1-(3-trimethoxysilylpropyl)-1-aza-2-silacyclopentane (shown as "Coupling Agent C" in Tables) was continuously added as the coupling agent at 0.052 mmol/min, and that an SRAE oil (JOMO Process NC 140, manufactured by JX Nippon Oil & Energy Corporation) was then continuously added as the rubber softener to obtain an amount of the SRAE oil of 25.0 g per 100 g of the polymer.

(Comparative Example 5)

A conjugated diene-based polymer (B6) was obtained in the same manner as in Reference Example 1 except that n-butyllithium was added as the polymerization initiator to the first reactor at 0.130 mmol/min, that 2,2-bis(2-oxolanyl) propane was added as the polar material at 0.055 mmol/min, that tetrakis(3-trimethoxysilylpropyl)-1,3-propanediamine

(shown as "Coupling Agent B" in Tables) was continuously added as the coupling agent at a rate of 0.017 mmol/min, and that an SRAE oil (JOMO Process NC 140, manufactured by JX Nippon Oil & Energy Corporation) was then continuously added as the rubber softener to obtain an amount of the SRAE oil of 37.5 g per 100 g of the polymer.

[Table 1]

| Sample No. | | | Example 1 | Example 2 | Example 3 | Example 4 | Example 5 | Example 6 | Example 7 |
|---|---|---|---|---|---|---|---|---|---|
| | | | A1 | A2 | A3 | A4 | A5 | A6 | A7 |
| Polymerization Conditions | n-Butyllithium for Treatment | (mmol/min) | 0.104 | 0.104 | 0.104 | 0.104 | 0.104 | 0.104 | 0.104 |
| | Polymerization Initiator n-Butyllithium | (mmol/min) | 0.239 | 0.239 | 0.239 | 0.239 | 0.239 | 0.193 | 0.343 |
| | Butadiene added to 1st Reactor | (g/min) | 18.8 | 15.8 | 19.8 | 18.8 | 18.8 | 18.8 | 18.8 |
| | Styrene added to 1st Reactor | (g/min) | 0.0 | 0.0 | 0.0 | 0.0 | 0.0 | 0.0 | 0.0 |
| | Normal hexane added to 1st Reactor | (g/min) | 163.4 | 156.0 | 165.6 | 163.4 | 163.4 | 163.4 | 163.4 |
| | Polar Material added to 1st Reactor | (mmol/min) | 0.027 | 0.072 | 0.145 | 0.023 | 0.027 | 0.019 | 0.033 |
| | Polymerization Temperature in 1st Reactor | (°C) | 78 | 78 | 78 | 82 | 78 | 78 | 78 |
| | Butadiene added to 2nd Reactor | (g/min) | 10.6 | 14.0 | 7.2 | 11.2 | 10.6 | 10.6 | 10.6 |
| | Styrene added to 2nd Reactor | (g/min) | 4.5 | 4.4 | 4.2 | 5.3 | 4.5 | 4.5 | 4.5 |
| | Normal hexane added to 2nd Reactor | (g/min) | 41.9 | 49.9 | 33.2 | 44.8 | 41.9 | 41.9 | 41.9 |
| | Polar Material added to 2nd Reactor | (mmol/min) | 0.415 | 0.370 | 0.253 | 0.153 | 0.415 | 0.298 | 0.596 |
| | Polymerization Temperature in 2nd Reactor | (°C) | 82 | 82 | 78 | 82 | 82 | 82 | 82 |
| | Styrene added to 2nd Reactor/ Butadiene added to 2nd Reactor | (mass %) | 42.3 | 31.3 | 58.4 | 47.3 | 42.5 | 42.3 | 42.3 |
| | Styrene added to 2nd Reactor/ (Butadiene added to 2nd Reactor+Styrene added to 2nd Reactor) | (mass %) | 29.7 | 23.9 | 36.9 | 32.1 | 29.8 | 29.7 | 29.7 |
| | Polar Material added to 2nd Reactor/ Polar Material added to 1st Reactor | (mol%) | 15.3 | 5.1 | 1.8 | 6.7 | 15.3 | 15.7 | 18.1 |
| | Polymerization Reaction Rate in P1 | | 90 | 90 | 90 | 90 | 90 | 90 | 90 |
| | Coupling Agent A | (mmol/min) | 0.097 | 0.097 | 0.097 | 0.097 | 0.110 | - | 0.173 |
| | Coupling Agent B | (mmol/min) | 0.010 | 0.010 | 0.010 | 0.010 | 0.007 | - | - |
| | Coupling Agent C | (mmol/min) | - | - | - | - | - | - | - |

(continued)

| Sample No. | | | Example 1 | Example 2 | Example 3 | Example 4 | Example 5 | Example 6 | Example 7 |
|---|---|---|---|---|---|---|---|---|---|
| | | | A1 | A2 | A3 | A4 | A5 | A6 | A7 |
| First Polymer Segment | (Physical Property 1) Amount of Bound Styrene $X_1$ | (mass %) | 0 | 0 | 0 | 0 | 0 | 0 | 0 |
| | (Physical Property 2) Amount of Vinyl Bond $Y_1$ | (mol%) | 20 | 30 | 40 | 15 | 20 | 20 | 20 |
| | (Physical Property 3) Segment Ratio $r_1$ | (mass %) | 50 | 45 | 60 | 50 | 50 | 50 | 50 |
| | Expression (2)Y1 | | ○ | ○ | ○ | ○ | ○ | ○ | ○ |
| Second Polymer Segment | (Physical Property 1) Amount of Bound Styrene $X_2$ | (mass %) | 25 | 20 | 30 | 20 | 25 | 25 | 25 |
| | (Physical Property 2) Amount of Vinyl Bond $Y_2$ | (mol%) | 60 | 50 | 56 | 42 | 60 | 60 | 60 |
| | (Physical Property 3) Segment Ratio r2 | (mass %) | 50 | 55 | 40 | 50 | 50 | 50 | 50 |
| | (Physical Property 4) Estimated Glass Transition Temperature | (°C) | -23 | -38 | -19 | -43 | -23 | -23 | -23 |

(continued)

| Sample No. | | | Example 1 | Example 2 | Example 3 | Example 4 | Example 5 | Example 6 | Example 7 |
|---|---|---|---|---|---|---|---|---|---|
| | | | A1 | A2 | A3 | A4 | A5 | A6 | A7 |
| Conjugated Diene-based Polymer | (Physical Property 1) Amount of Bound Styrene Xall | (mass %) | 11 | 11 | 11 | 10 | 11 | 11 | 11 |
| | (Physical Property 2) Amount of Vinyl Bond Yall | (mol%) | 35 | 35 | 45 | 30 | 35 | 35 | 35 |
| | (Physical Property 4) Estimated Glass Transition Temperature | (°C) | -61 | -61 | -53 | -67 | -61 | -61 | -61 |
| | (Physical Property 5) Weight Average Molecular Weight Mw | ($10^4$ g/mol) | 50 | 50 | 50 | 50 | 47 | 51 | 35 |
| | (Physical Property 5) Number Average Molecular Weight Mn | ($10^4$ g/mol) | 27 | 27 | 27 | 27 | 27 | 30 | 19 |
| | (Physical Property 5) Molecular Weight Distribution Mw/Mn | | 1.85 | 1.85 | 1.85 | 1.85 | 1.74 | 1.70 | 1.70 |
| | (Physical Property 6) Mooney Viscosity of Polymer | | 67 | 67 | 67 | 67 | 62 | 63 | 35 |
| | (Physical Property 7) Extrapolated Onset Glass Transition Temperature | (°C) | -76.5 | -74.0 | -62.0 | -78.0 | -76.5 | -76.5 | -76.5 |
| | (Physical Property 7) Glass Transition Temperature | (°C) | -64.0 | -58.5 | -54.0 | -69.0 | -64.0 | -64.0 | -64.0 |
| | (Physical Property 7) Extrapolated End Glass Transition Temperature | (°C) | -53.0 | -46.2 | -46.5 | -58.0 | -53.0 | -53.0 | -53.0 |
| | (Physical Property 7) Extrapolated End Glass Transition Temperature-Onset Temperature | (°C) | 23.5 | 27.8 | 15.5 | 20.0 | 23.5 | 23.5 | 23.5 |
| | (Physical Property 8) Modification Ratio | (%) | 78.0 | 78.0 | 78.0 | 78.0 | 78.0 | 0.0 | 78.8 |

[Table 2]

| Sample No. | | | Example 8 | Example 9 | Example 10 | Example 11 | Example 12 | Example 13 | Example 14 | Example 15 | Example 16 |
|---|---|---|---|---|---|---|---|---|---|---|---|
| | | | A8 | A9 | A10 | A11 | A12 | A13 | A14 | A15 | A16 |
| Polymerization Conditions | n-Butyllithium for Treatment | (mmol/min) | 0.104 | 0.104 | 0.104 | 0.104 | 0.104 | 0.104 | 0.104 | 0.104 | 0.104 |
| | Polymerization Initiator n-Butyllithium | (mmol/min) | 0.198 | 0.130 | 0.239 | 0.239 | 0.224 | 0.370 | 0.062 | 0.239 | 0.239 |
| | Butadiene added to 1st Reactor | (g/min) | 18.8 | 18.8 | 18.8 | 18.8 | 13.8 | 18.8 | 18.8 | 21.4 | 15.4 |
| | Styrene added to 1st Reactor | (g/min) | 0.0 | 0.0 | 0.0 | 0.0 | 4.4 | 0.0 | 0.0 | 0.0 | 0.0 |
| | Normal hexane added to 1st Reactor | (g/min) | 163.4 | 163.4 | 163.4 | 163.4 | 104.8 | 163.4 | 163.4 | 170.3 | 166.0 |
| | Polar Material added to 1st Reactor | (mmol/min) | 0.019 | 0.015 | 0.023 | 0.266 | 0.003 | 0.036 | 0.007 | 0.054 | 0.072 |
| | Polymerization Temperature in 1st Reactor | (°C) | 78 | 78 | 82 | 78 | 65 | 78 | 78 | 78 | 78 |
| | Butadiene added to 2nd Reactor | (g/min) | 10.6 | 10.6 | 13.8 | 10.6 | 2.9 | 10.6 | 10.6 | 9.2 | 12.6 |
| | Styrene added to 2nd Reactor | (g/min) | 4.5 | 4.5 | 2.7 | 4.5 | 0.0 | 4.5 | 4.5 | 3.5 | 5.3 |
| | Normal hexane added to 2nd Reactor | (g/min) | 41.9 | 41.9 | 46.6 | 42.0 | 9.5 | 41.9 | 41.9 | 36.8 | 48.2 |
| | Polar Material added to 2nd Reactor | (mmol/min) | 0.298 | 0.235 | 0.153 | 0.176 | 0.020 | 0.641 | 0.094 | 0.394 | 0.340 |
| | Polymerization Temperature in 2nd Reactor | (°C) | 82 | 82 | 82 | 82 | 65 | 82 | 82 | 82 | 80 |
| | Styrene added to 2nd Reactor/ Butadiene added to 2nd Reactor | (mass %) | 42.3 | 42.3 | 19.6 | 42.5 | 0.0 | 42.3 | 42.3 | 38.1 | 42.4 |
| | Styrene added to 2nd Reactor/ (Butadiene added to 2nd Reactor+Styrene added to 2nd Reactor) | (mass %) | 29.7 | 29.7 | 16.4 | 29.8 | 0.0 | 29.7 | 29.7 | 27.6 | 29.8 |
| | Polar Material added to 2nd Reactor/ Polar Material added to 1st Reactor | (mol%) | 15.7 | 15.7 | 6.7 | 0.7 | 6.7 | 17.8 | 13.5 | 7.3 | 4.7 |
| | Polymerization Reaction Rate in P1 | | 90 | 90 | 90 | 90 | 70 | 90 | 90 | 90 | 90 |
| | Coupling Agent A | (mmol/min) | - | - | 0.097 | 0.097 | 0.087 | 0.185 | - | 0.097 | 0.097 |
| | Coupling Agent B | (mmol/min) | - | 0.017 | 0.010 | 0.010 | 0.009 | - | 0.008 | 0.010 | 0.010 |
| | Coupling Agent C | (mmol/min) | 0.052 | - | - | - | - | - | - | - | - |
| First Polymer Segment | (Physical Property 1) Amount of Bound Styrene $X_1$ | (mass %) | 0 | 0 | 0 | 0 | 7 | 0 | 0 | 0 | 0 |

(continued)

| Sample No. | | | Example 8 | Example 9 | Example 10 | Example 11 | Example 12 | Example 13 | Example 14 | Example 15 | Example 16 |
|---|---|---|---|---|---|---|---|---|---|---|---|
| | | | A8 | A9 | A10 | A11 | A12 | A13 | A14 | A15 | A16 |
| | (Physical Property 2) Amount of Vinyl Bond $Y_1$ | (mol%) | 20 | 20 | 15 | 50 | 12 | 20 | 20 | 25 | 30 |
| | (Physical Property 3) Segment Ratio $r_1$ | (mass %) | 50 | 50 | 50 | 50 | 70 | 50 | 50 | 58 | 45 |
| | Expression (2)Y1 | | ○ | ○ | ○ | × | ○ | ○ | ○ | ○ | ○ |
| Second Polymer Segment | (Physical Property 1) Amount of Bound Styrene $X_2$ | (mass %) | 25 | 25 | 10 | 25 | 40 | 25 | 25 | 20 | 25 |
| | (Physical Property 2) Amount of Vinyl Bond $Y_2$ | (mol%) | 60 | 60 | 42 | 50 | 28 | 60 | 60 | 55 | 57 |
| | (Physical Property 3) Segment Ratio r2 | (mass %) | 50 | 50 | 50 | 50 | 30 | 50 | 50 | 42 | 55 |
| | (Physical Property 4) Estimated Glass Transition Temperature | (°C) | -23 | -23 | -57 | -31 | -24 | -23 | -23 | -34 | -25 |
| Conjugated Diene-based Polymer | (Physical Property 1) Amount of Bound Styrene Xall | (mass %) | 11 | 11 | 5 | 13 | 17 | 11 | 11 | 9 | 13 |
| | (Physical Property 2) Amount of Vinyl Bond Yall | (mol%) | 35 | 35 | 31 | 50 | 13 | 35 | 35 | 36 | 43 |
| | (Physical Property 4) Estimated Glass Transition Temperature | (°C) | -61 | -61 | -72 | -47 | -70 | -61 | -61 | -63 | -50 |
| | (Physical Property 5) Weight Average Molecular Weight Mw | ($10^4$ g/mol) | 83 | 115 | 50 | 50 | 50 | 29 | 138 | 50 | 50 |
| | (Physical Property 5) Number Average Molecular Weight Mn | ($10^4$ g/mol) | 44 | 61 | 27 | 27 | 30 | 17 | 66 | 27 | 27 |
| | (Physical Property 5) Molecular Weight Distribution Mw/Mn | | 1.89 | 1.89 | 1.85 | 1.85 | 1.65 | 1.70 | 2.10 | 1.85 | 1.85 |
| | (Physical Property 6) Mooney Viscosity of Polymer | | 110 | 110 | 67 | 67 | 67 | 23 | 125 | 67 | 67 |
| | (Physical Property 7) Extrapolated Onset Glass Transition Temperature | (°C) | -76.5 | -76.5 | -85.0 | -58.0 | -80.0 | -76.5 | -76.5 | -76.1 | -73.7 |

(continued)

| Sample No. | | | Example 8 | Example 9 | Example 10 | Example 11 | Example 12 | Example 13 | Example 14 | Example 15 | Example 16 |
|---|---|---|---|---|---|---|---|---|---|---|---|
| | | | A8 | A9 | A10 | A11 | A12 | A13 | A14 | A15 | A16 |
| | (Physical Property 7) Glass Transition Temperature | (°C) | -64.0 | -64.0 | -74.0 | -49.0 | -69.0 | -64.0 | -64.0 | -64.7 | -57.4 |
| | (Physical Property 7) Extrapolated End Glass Transition Temperature | (°C) | -53.0 | -53.0 | -60.5 | -40.0 | -58.0 | -53.0 | -53.0 | -54.5 | -39.5 |
| | (Physical Property 7) Extrapolated End Glass Transition Temperature-Onset Temperature | (°C) | 23.5 | 23.5 | 23.5 | 18.0 | 22.0 | 23.5 | 23.5 | 21.6 | 34.2 |
| | (Physical Property 8) Modification Ratio | (%) | 77.5 | 78.5 | 78.0 | 73.0 | 65.0 | 80.0 | 75.0 | 78.0 | 78.0 |

[Table 3]

| Sample No. | | | Ref. Ex. 1 | Comp. Ex. 1 | Comp. Ex. 2 | Comp. Ex. 3 | Comp. Ex. 4 | Comp. Ex. 5 |
|---|---|---|---|---|---|---|---|---|
| | | | B1 | B2 | B3 | B4 | B5 | B6 |
| Polymerization Conditions | n-Butyllithium for Treatment | (mmol/min) | 0.104 | 0.104 | 0.104 | 0.104 | 0.104 | 0.104 |
| | Polymerization Initiator n-Butyllithium | (mmol/min) | 0.239 | 0.239 | 0.193 | 0.343 | 0.198 | 0.130 |
| | Butadiene added to 1st Reactor | (g/min) | 22.3 | 18.8 | 22.3 | 22.3 | 22.3 | 22.3 |
| | Styrene added to 1st Reactor | (g/min) | 4.2 | 0.0 | 4.2 | 4.2 | 4.2 | 4.2 |
| | Normal hexane added to 1st Reactor | (g/min) | 178.8 | 163.4 | 109.2 | 109.2 | 109.2 | 109.2 |
| | Polar Material added to 1st Reactor | (mmol/min) | 0.101 | 0.266 | 0.070 | 0.124 | 0.070 | 0.055 |
| | Polymerization Temperature in 1st Reactor | (°C) | 68 | 78 | 68 | 68 | 68 | 68 |
| | Butadiene added to 2nd Reactor | (g/min) | 7.4 | 9.7 | 7.4 | 7.4 | 7.4 | 7.4 |
| | Styrene added to 2nd Reactor | (g/min) | 0.0 | 5.4 | 0.0 | 0.0 | 0.0 | 0.0 |
| | Normal hexane added to 2nd Reactor | (g/min) | 26.7 | 41.3 | 26.7 | 26.7 | 26.7 | 26.7 |
| | Polar Material added to 2nd Reactor | (mmol/min) | 0.000 | 0.156 | 0.000 | 0.000 | 0.000 | 0.000 |
| | Polymerization Temperature in 2nd Reactor | (°C) | 73 | 82 | 73 | 73 | 73 | 73 |
| | Styrene added to 2nd Reactor/ Butadiene added to 2nd Reactor | (mass %) | 0.0 | 55.7 | 0.0 | 0.0 | 0.0 | 0.0 |
| | Styrene added to 2nd Reactor/ (Butadiene added to 2nd Reactor+Styrene added to 2nd Reactor) | (mass %) | 0.0 | 35.8 | 0.0 | 0.0 | 0.0 | 0.0 |
| | Polar Material added to 2nd Reactor/ Polar Material added to 1st Reactor | (mol%) | 0.0 | 0.6 | 0.0 | 0.0 | 0.0 | 0.0 |

(continued)

| Sample No. | | | Ref. Ex. 1 | Comp. Ex. 1 | Comp. Ex. 2 | Comp. Ex. 3 | Comp. Ex. 4 | Comp. Ex. 5 |
|---|---|---|---|---|---|---|---|---|
| | | | B1 | B2 | B3 | B4 | B5 | B6 |
| | Polymerization Reaction Rate in P1 | | 90 | 90 | 90 | 90 | 90 | 90 |
| | Coupling Agent A | (mmol/min) | 0.097 | 0.097 | - | 0.173 | - | - |
| | Coupling Agent B | (mmol/min) | 0.010 | 0.010 | - | - | - | 0.017 |
| | Coupling Agent C | (mmol/min) | - | - | - | - | 0.052 | - |
| First Polymer Segment | (Physical Property 1) Amount of Bound Styrene $X_1$ | (mass %) | - | 0 | - | - | - | - |
| | (Physical Property 2) Amount of Vinyl Bond $Y_1$ | (mol%) | - | 50 | - | - | - | - |
| | (Physical Property 3) Segment Ratio $r_1$ | (mass %) | - | 50 | - | - | - | - |
| | Expression (2)Y1 | (mol%) | - | × | - | - | - | - |
| Second Polymer Segment | (Physical Property 1) Amount of Bound Styrene $X_2$ | (mass %) | - | 30 | - | - | - | - |
| | (Physical Property 2) Amount of Vinyl Bond $Y_2$ | (mol%) | - | 60 | - | - | - | - |
| | (Physical Property 3) Segment Ratio r2 | (mass %) | - | 50 | - | - | - | - |
| | (Physical Property 4) Estimated Glass Transition Temperature | (°C) | - | -16 | - | - | - | - |
| Conjugated Diene-based Polymer | (Physical Property 1) Amount of Bound Styrene Xall | (mass %) | 10 | 15 | 10 | 10 | 10 | 10 |
| | (Physical Property 2) Amount of Vinyl Bond Yall | (mol%) | 37 | 55 | 37 | 37 | 37 | 37 |
| | (Physical Property 4) Estimated Glass Transition Temperature | (°C) | -61 | -40 | -61 | -61 | -61 | -61 |
| | (Physical Property 5) Weight Average Molecular Weight Mw | ($10^4$ g/mol) | 50 | 50 | 51 | 35 | 83 | 115 |

(continued)

| Sample No. | | | Ref. Ex. 1 | Comp. Ex. 1 | Comp. Ex. 2 | Comp. Ex. 3 | Comp. Ex. 4 | Comp. Ex. 5 |
|---|---|---|---|---|---|---|---|---|
| | | | B1 | B2 | B3 | B4 | B5 | B6 |
| | (Physical Property 5) Number Average Molecular Weight Mn | ($10^4$ g/mol) | 27 | 27 | 30 | 19 | 44 | 61 |
| | (Physical Property 5) Molecular Weight Distribution Mw/Mn | | 1.85 | 1.85 | 1.70 | 1.89 | 1.89 | 1.89 |
| | (Physical Property 6) Mooney Viscosity of Polymer | | 67 | 67 | 63 | 35 | 110 | 110 |
| | (Physical Property 7) Extrapolated Onset Glass Transition Temperature | (°C) | -65.0 | -52.0 | -65.0 | -65.0 | -65.0 | -65.0 |
| | (Physical Property 7) Glass Transition Temperature | (°C) | -61.4 | -42.0 | -61.4 | -61.4 | -61.4 | -61.4 |
| | (Physical Property 7) Extrapolated End Glass Transition Temperature | (°C) | -57.9 | -32.0 | -57.9 | -57.9 | -57.9 | -57.9 |
| | (Physical Property 7) Extrapolated End Glass Transition Temperature-Onset Temperature | (°C) | 7.1 | 20.0 | 7.1 | 7.1 | 7.1 | 7.1 |
| | (Physical Property 8) Modification Ratio | (%) | 85.2 | 78.0 | 0.0 | 78.8 | 77.5 | 74.5 |

[Examples 17 to 32], [Reference Example 2], and [Comparative Examples 6 to 10]

The conjugated diene-based polymers A1 to A16 and B1 to B6 shown in Tables 1 to 3 were respectively used as raw material rubbers to obtain rubber compositions containing the respective raw material rubbers in accordance with the following composition:

Conjugated diene-based polymer (any one of A1 to A16, and B1 to B6): 100 parts by mass (excluding oil)

Silica (trade name "Ultrasil 7000GR", manufactured by Evonik Degussa, nitrogen adsorption specific surface area: 170 $m^2/g$): 85.0 parts by mass

Carbon black (trade name "Seast 7HM (N234)", manufactured by Tokai Carbon Co., Ltd.): 2.0 parts by mass

Silane coupling agent: (trade name "Si69", manufactured by Evonik Degussa, bis(triethoxysilylpropyl)tetrasulfide): 6.8 parts by mass

SRAE oil (trade name "Process NC140", manufactured by JX Nippon Oil & Energy Corporation): 40 parts by mass

Zinc oxide: 2.4 parts by mass

Stearic acid: 1.25 parts by mass

Anti-aging agent (N-(1,3-dimethylbutyl)-N'-phenyl-p-phenylenediamine): 3.5 parts by mass

Sulfur: 1.0 part by mass

Vulcanization accelerator 1: tetrabenzylthiuram disulfide: 0.5 parts by mass

Vulcanization accelerator 2: N-(tert-butyl)-2-benzothiazolesulfenamide: 2.5 parts by mass

Total: 246.95 parts by mass

The above-described materials were kneaded by the following method to obtain a rubber composition.
A closed kneader (having an internal volume of 0.3 L) equipped with a temperature controller was used to knead, as a first stage of kneading, the raw material rubber (any one of A1 to A16 and B1 to B6), the fillers (silica and carbon black), the silane coupling agent, the process oil, zinc oxide, and stearic acid under conditions of a filling ratio of 65% and a rotor rotation speed of from 30 to 50 rpm. Here, the temperature of the closed kneader was controlled to obtain each rubber composition (compound) at a discharging temperature of from 145 to 150°C.
Next, after cooling the compound obtained as described above to room temperature, as a second stage of the kneading, the anti-aging agent was added thereto, and the resultant was kneaded again for improving dispersibility of the silica. Also in this case, the discharging temperature for the compound was adjusted to 120°C by the temperature control of the kneader.
After cooling, as a third stage of the kneading, with sulfur and the vulcanization accelerators 1 and 2 added thereto, the resultant was kneaded with an open roll set to 70°C.
Thereafter, the resultant was molded and vulcanized at 160°C for 20 minutes with a vulcanizing press.
The rubber compositions before the vulcanization, and the rubber compositions after the vulcanization were evaluated.
Specifically, the evaluations were performed as described below.
Results are shown in Tables 4 to 6.

[Evaluations 1 to 3: Viscoelastisity Parameter]

A viscoelasticity testing machine "ARES" manufactured by Rheometric Scientific, Inc. was used to measure a viscoelasticity parameter in a torsion mode.
Each measurement value was shown as an index obtained assuming that a result obtained in the rubber composition of Reference Example 2 was 100.

([Evaluation 1] Low Hysteresis Loss Property)

A tan δ measured at 50°C at a frequency of 10 Hz and strain of 3% was used as an index of the low hysteresis loss property.
A larger index indicates a better low hysteresis loss property, and it was determined that the composition had a sufficient low hysteresis loss property when the index value was larger than 85.

([Evaluation 2] Wet Grip Performance)

A tan δ measured at 0°C at a frequency of 10 Hz and strain of 1% was used as an index of the wet grip performance.
A larger index indicates a better wet grip property.
It was determined that the composition had a sufficient wet grip property when the index value was 130 or more.

([Evaluation 3] Low Temperature Performance)

A storage modulus G' measured at -20°C at a frequency of 10 Hz and strain of 1% was used as an index of the low temperature performance.
A larger index indicates a better low temperature property.
It was determined that the composition had a sufficient low temperature property when the index value was 65 or more.

[[Evaluation 4] Abrasion Resistance]

An Acron abrasion tester (manufactured by Yasuda Seiki Seisakusho, Ltd.) was used to measure an abrasion amount through 1,000 rotations at a load of 44.4 N in accordance with JIS K6264-2, and each measured value was shown as an index obtained assuming that a result of Reference Example 2 was 100.
A larger index indicates better abrasion resistance.
It was determined that the composition had sufficient abrasion resistance when the index was 70 or more.

[[Evaluation 5] Processability]

Regarding each of the conjugated diene-based polymers before vulcanization produced by the methods described in Examples and Comparative Examples, a clump (shape) obtained in forming the polymer into a sheet-like shape with a roll immediately after being discharged from a pressurizing kneader (immediately after being discharged after completing the kneading with the pressurizing kneader in the first stage of the kneading) was visually observed to perform evaluation based on the following criteria by panelists each on a scale of 1 to 5. A clumping property is an index of the processability of a vulcanizate.
A larger index indicates better processability.
It was determined that the composition had sufficient processability when the index was 4 or more.

<Evaluation Criteria>

1: A sheet end portion was smooth by 50% or less, and processability was very poor.

2: A sheet end portion was smooth by more than 50% and 60% or less, and processability was poor.

3: A sheet end portion was smooth by more than 60% and 80% or less, and processability was good.

4: A sheet end portion was smooth by more than 80% and 90% or less, and processability was excellent.

5: A sheet end portion was smooth over 90%, and processability was very excellent.

[[Evaluation 6] Wet Grip Performance and Low Temperature Property]

A sum of the indexes calculated in Evaluations 2 and 3 was used as an index of the wet grip performance and the low temperature property.
A larger index indicates that the wet grip performance and the low temperature property are good.

[Table 4]

| | Example 17 | Example 18 | Example 19 | Example 20 | Example 21 | Example 22 | Example 23 |
|---|---|---|---|---|---|---|---|
| Conjugated Diene-based Polymer | A1 | A2 | A3 | A4 | A5 | A6 | A7 |
| (Evaluation 1)Low Hysteresis Loss Property | 94 | 95 | 93 | 94 | 94 | 62 | 94 |

(continued)

| | Example 17 | Example 18 | Example 19 | Example 20 | Example 21 | Example 22 | Example 23 |
|---|---|---|---|---|---|---|---|
| (Evaluation 2)Wet Grip Performance | 140 | 140 | 160 | 135 | 140 | 140 | 140 |
| (Evaluation 3)Low-temperature Performance | 90 | 92 | 88 | 91 | 90 | 62 | 90 |
| (Evaluation 4) Abrasion Resistance | 100 | 100 | 86 | 110 | 100 | 85 | 80 |
| (Evaluation 5)Processability | 4 | 4 | 4 | 4 | 4 | 4 | 5 |
| (Evaluation 6)Sum of (Evaluation 2) and (Evaluation 3) | 230 | 232 | 248 | 226 | 230 | 202 | 230 |

[Table 5]

| | Example 24 | Example 25 | Example 26 | Example 27 | Example 28 | Example 29 | Example 30 | Example 31 | Example 32 |
|---|---|---|---|---|---|---|---|---|---|
| Conjugated Diene-based Polymer | A8 | A9 | A10 | A11 | A12 | A13 | A14 | A15 | A16 |
| (Evaluation 1)Low Hysteresis Loss Property | 89 | 86 | 94 | 87 | 86 | 91 | 83 | 91 | 88 |
| (Evaluation 2)Wet Grip Performance | 140 | 140 | 130 | 180 | 130 | 140 | 140 | 137 | 180 |
| (Evaluation 3)Low-temperature Performance | 84 | 80 | 96 | 68 | 89 | 100 | 62 | 93 | 79 |
| (Evaluation 4)Abrasion Resistance | 118 | 121 | 120 | 70 | 90 | 67 | 135 | 104 | 83 |
| (Evaluation 5)Processability | 4 | 3 | 4 | 4 | 3 | 5 | 2 | 4 | 4 |
| (Evaluation 6)Sum of (Evaluation 2) and (Evaluation 3) | 224 | 220 | 226 | 248 | 219 | 240 | 202 | 230 | 259 |

[Table 6]

| | Ref. Ex. 2 | Comp. Ex. 6 | Comp. Ex. 7 | Comp. Ex. 8 | Comp. Ex. 9 | Comp. Ex. 10 |
|---|---|---|---|---|---|---|
| Conjugated Diene-based Polymer | B1 | B2 | B3 | B4 | B5 | B6 |
| (Evaluation 1)Low Hysteresis Loss Property | 100 | 85 | 64 | 101 | 99 | 97 |
| (Evaluation 2)Wet Grip Performance | 100 | 220 | 100 | 100 | 100 | 100 |
| (Evaluation 3)Low-temperature Performance | 100 | 64 | 78 | 104 | 87 | 82 |
| (Evaluation 4)Abrasion Resistance | 100 | 60 | 85 | 80 | 118 | 121 |
| (Evaluation 5)Processability | 4 | 4 | 5 | 4 | 4 | 3 |
| (Evaluation 6)Sum of (Evaluation 2) and (Evaluation 3) | 200 | 284 | 178 | 204 | 187 | 182 |

As shown in Tables 4 to 6, it was found that the rubber compositions of the conjugated diene-based polymers of Examples 17 to 32 using the conjugated diene-based polymers A1 to A16 satisfying the estimated Tg are superior in the low temperature property obtained in the form of vulcanizates as compared with the rubber composition of Comparative Example 6 using the conjugated diene-based polymer B2.

As shown in Tables 4 to 6, it was found that the rubber compositions of the conjugated diene-based polymers of Examples 17 to 21, 23, 27 to 29, 31, and 32 using the conjugated diene-based polymers A1 to A5, A7, A11 to A13, A15, and A16 satisfying the difference between the extrapolated end and onset temperatures of the glass transition temperature of 15°C or more and 35°C or less are superior in the balance between the wet grip performance and the low temperature property obtained in the form of vulcanizates as compared with the rubber composition of Reference Example 2 using the conjugated diene-based polymer B1.

As shown in Tables 4 to 6, it was found that the rubber composition of Example 22 using the conjugated diene-based polymer A6 is superior in the balance between the wet grip performance and the low temperature property obtained in the form of a vulcanizate as compared with the rubber composition of Comparative Example 7 using the conjugated diene-based polymer B3.

It was found, in comparison between Example 23 and Comparative Example 8, between Example 24 and Comparative Example 9, and between Example 25 and Comparative Example 10, that the balance between the wet grip performance and the low temperature property obtained in the form of a vulcanizate is excellent in Examples.

As shown in Tables 4 to 6, it was found that the rubber compositions of Examples 17 to 24, 26, 27, 29, 31, and 32 using the conjugated diene-based polymers A1 to A8, A10, A11, A13, A15, and A16 satisfying the molecular weight distribution of 1.7 or more and 2.5 or less are excellent in the processability obtained in the form of vulcanizates.

As shown in Tables 4 to 6, it was found that the rubber compositions of Examples 17 to 21, and 23 to 32 using the conjugated diene-based polymers A1 to A5 and A7 to A16 are superior in the low hysteresis loss property obtained in the form of vulcanizates as compared with the rubber composition of Comparative Example 7 using the conjugated diene-based polymer B3.

This application is based upon Japanese Patent Application filed with the Japanese Patent Office on April 27, 2023 (Japanese Patent Application No. 2023-072838), the entire contents of which are incorporated herein by reference.

## Industrial Applicability

A conjugated diene-based polymer of the present invention is industrially applicable as materials in various fields such as a tire tread, interior and exterior of a vehicle, an anti-vibration rubber, a belt, shoes, a foam body, and various industrial products.

## Claims

1. A conjugated diene-based polymer,

   wherein an estimated glass transition temperature (estimated Tg) derived from a microstructure of the conjugated diene-based polymer is -72°C or more and - 45°C or less,
   the conjugated diene-based polymer has only one glass transition temperature (Tg) measured by differential scanning calorimetry (DSC), and
   a difference between an extrapolated onset temperature and an extrapolated end temperature of the glass transition temperature (Tg) is 15°C or more and 35°C or less.

2. The conjugated diene-based polymer according to claim 1, comprising a first polymer segment not having an aromatic vinyl monomer unit, and a second polymer segment having an aromatic vinyl monomer unit,

   wherein an amount of vinyl bond $Y_1$ (mol%) in bound conjugated diene in the first polymer segment satisfies the following expression (2):

$$10 \leq Y_1 \leq 45 \ldots (2)$$

   an estimated glass transition temperature (estimated Tg) derived from a microstructure of the second polymer segment is more than -45°C and -5°C or less.

3. The conjugated diene-based polymer according to claim 1, wherein a molecular weight distribution corresponding to a ratio Mw/Mn between a weight average molecular weight Mw and a number average molecular weight Mn is 1.7 or more and 2.5 or less.

4. The conjugated diene-based polymer according to claim 2, wherein a segment ratio of the first polymer segment is 20% by mass or more and 80% by mass or less.

5. The conjugated diene-based polymer according to claim 1, having a weight average molecular weight of 300,000 or more and 1,350,000 or less.

6. The conjugated diene-based polymer according to claim 1, comprising a nitrogen atom.

7. The conjugated diene-based polymer according to claim 6, wherein a modification ratio of the conjugated diene-based polymer is 70% or more.

8. A method for producing the conjugated diene-based polymer according to claim 2, using two or more continuous reactors, the method comprising:

   a first polymerization step (P1) of continuously forming the first polymer segment of the conjugated diene-based polymer with a conjugated diene compound, a polymerization initiator, and a polar material added to the continuous reactors; and
   a second polymerization step (P2) of forming the second polymer segment at an end of the first polymer segment with an aromatic vinyl compound and a polar material added to the continuous reactors.

9. The method for producing the conjugated diene-based polymer according to claim 8, further comprising, after the second polymerization step (P2):
   a coupling step (P3) of reacting a coupling agent with the conjugated diene-based polymer.

10. The method for producing the conjugated diene-based polymer according to claim 8, wherein a mass ratio of the conjugated diene compound added in the first polymerization step (P1) to a total amount of the conjugated diene compound and the aromatic vinyl compound added is 20% by mass or more and 80% by mass or less.

11. The method for producing the conjugated diene-based polymer according to claim 8, wherein a polymerization reaction rate in the first polymerization step (P1) is 75% or more and 95% or less.

**12.** The method for producing the conjugated diene-based polymer according to claim 8, wherein a mass ratio of an amount of the aromatic vinyl compound added to an amount of the conjugated diene compound added in the second polymerization step (P2) is 0.15 or more and 0.70 or less.

**13.** The method for producing the conjugated diene-based polymer according to claim 8, wherein the polar material is added in the second polymerization step (P2) in an amount larger than an amount of the polar material added in the first polymerization step (P1).

**14.** The method for producing the conjugated diene-based polymer according to claim 9, wherein the coupling agent is an aminoalkoxysilane compound.

## INTERNATIONAL SEARCH REPORT

International application No.
**PCT/JP2024/016246**

### A. CLASSIFICATION OF SUBJECT MATTER

***C08F 236/04***(2006.01)i; ***C08F 8/42***(2006.01)i
FI: C08F236/04; C08F8/42

According to International Patent Classification (IPC) or to both national classification and IPC

### B. FIELDS SEARCHED

Minimum documentation searched (classification system followed by classification symbols)

C08F236/04; C08F8/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-517122 A (LG CHEM, LTD.) 21 April 2023 (2023-04-21) claims 1, 2, 10, paragraphs [0138], [0146], [0149]-[0154], [0163], [0165], examples | 1-14 |
| A | JP 2023-503137 A (LG CHEM, LTD.) 26 January 2023 (2023-01-26) | 1-14 |
| A | JP 2020-512469 A (LG CHEM, LTD.) 23 April 2020 (2020-04-23) | 1-14 |
| A | WO 2021/201289 A1 (ASAHI KASEI KABUSHIKI KAISHA) 07 October 2021 (2021-10-07) | 1-14 |
| A | WO 2021/024811 A1 (ASAHI KASEI KABUSHIKI KAISHA) 11 February 2021 (2021-02-11) | 1-14 |
| A | KR 10-2021-0109897 A (LG CHEM, LTD.) 07 September 2021 (2021-09-07) | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016246**

| Patent document cited in search report | Publication date (day/month/year) | Patent family member(s) | Publication date (day/month/year) |
|---|---|---|---|
| JP 2023-517122 A | 21 April 2023 | US 2023/0038987 A1<br>claims 1, 2, 10, paragraphs [0145], [0155]-[0163], [0173], [0175], examples<br>WO 2022/103042 A1<br>EP 4086293 A1<br>CN 115087678 A | |
| JP 2023-503137 A | 26 January 2023 | US 2023/0051287 A1<br>WO 2022/030794 A1<br>EP 4043505 A1<br>CN 114729087 A | |
| JP 2020-512469 A | 23 April 2020 | US 2020/0115485 A1<br>WO 2019/112260 A1<br>EP 3536720 A1<br>CN 110121514 A | |
| WO 2021/201289 A1 | 07 October 2021 | US 2023/0159687 A1<br>EP 4130050 A1<br>CN 113493542 A<br>KR 10-2021-0124053 A | |
| WO 2021/024811 A1 | 11 February 2021 | US 2022/0275130 A1<br>EP 4011642 A1<br>KR 10-2022-0013407 A<br>CN 114174350 A | |
| KR 10-2021-0109897 A | 07 September 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021005295 A
- JP 3438317 B
- JP 59140211 A
- WO 2018128285 A
- JP 2023072838 A


### Non-patent literature cited in the description


- **R. R. HAMPTO**. *Analytical Chemistry*, 1949, vol. 21, 923
- **I. M. KOLTHOFF et al.** *J. Polym. Sci.*, 1946, vol. 1, 429
- **GORDON, M** ; **TAYLOR J. S.** *J., Appl. Chem.*, 1952, vol. 2, 493
- **J. BRANDRUP et al.** Polymer Handbook. John Wiley & Sons, Inc, 1966, vol. VI, 75
- *Kautschuk Gummi Kunststoffe*, 1999, vol. 52 (12), 799
- **R. R. HAMPTON**. *Analytical Chemistry*, 1949, vol. 21, 923